# EUROPEAN PATENT SPECIFICATION

(11) **EP 4 645 798 B1**
(45) Date of publication and mention of the grant of the patent: **28.10.2026**
(21) Application number: 24306426.8
(22) Date of filing: 30.08.2024
(51) Int. Cl.: H04L 41/084, H04L 41/0859, H04L 41/5054, G06F 16/27, H04L 67/1095, H04L 41/0813, G06F 8/61, G06F 9/4401, G06F 21/53, G06F 21/57, G06F 21/62, G06F 21/78, H04L 67/00, H04L 12/46, H04L 41/40, H04L 41/0894, H04L 41/12

(54) **METHOD AND SYSTEM FOR MANAGING A FLEET OF COMPUTING INFRASTRUCTURES**
VERFAHREN UND SYSTEM ZUR VERWALTUNG EINER FLOTTE VON DATENVERARBEITUNGSINFRASTRUKTUREN
PROCÉDÉ ET SYSTÈME DE GESTION D'UNE FLOTTE D'INFRASTRUCTURES INFORMATIQUES

(30) Priority: 30.04.2024 EP 24305690
(43) Date of publication of application: 05.11.2025
(73) Proprietor: OVH, 59100 Roubaix (FR)
(72) Inventor: DEGAT, Yann, 59100 Roubaix (FR); COUTELLIER, Victor, 59100 Roubaix (FR)
(74) Representative: BCF Global

(56) References cited:
- US-A1- 2020 059 420
- US-A1- 2023 251 852
- US-B2- 11 561 784
- ANONYMOUS: "Flux Documentation | Flux", 15 February 2023 (2023-02-15), pages 1 - 6, XP093245038, Retrieved from the Internet <URL:https://fluxcd.io/flux/> [retrieved on 20250130]
- PERFORCE: "How to Express Hiera Data: What It Is, Paths, and Flowcharts | Puppet by Perforce", 22 May 2022 (2022-05-22), pages 1 - 16, XP093245040, Retrieved from the Internet <URL:https://www.puppet.com/blog/hiera-data> [retrieved on 20250130]

## Description

### Introduction

The present technology relates to the technical field of managing and orchestrating distributed computing infrastructures using automated processes for configuring components.

### Background

Data centres have become essential for businesses and organisations to store, process, and manage large digital information repositories. Traditional methods of managing infrastructure, such as manual configuration are no longer sufficient to meet the demands of modern IT environments. One of the primary challenges in managing infrastructure at scale is ensuring consistency and reliability across multiple data centers. Manual configuration process introduces the risk of errors, inconsistencies, and configuration drift between different environments. These issues can lead to downtime, reduced performance, and increased operational costs.

Another challenge is the need for efficient and automated deployment workflows. With the rapid pace of software development and release cycles, manual deployment processes are no longer able to keep up with the demands of modern IT operations. Automated deployment workflows are essential for ensuring that infrastructure is deployed consistently and reliably across multiple environments, reducing the risk of errors and downtime.

Security is another major concern in managing infrastructure at scale. With the increasing number and complexity of infrastructure components, it is becoming increasingly difficult to ensure that all configurations are secure, and that sensitive data is protected. Access control and encryption keys must be managed effectively to prevent unauthorized access and data breaches.

Monitoring performance and resource utilization is also useful for ensuring the health and availability of infrastructure at scale. With so many components and services, it can be challenging to gain visibility into the performance and behavior of each component, making it difficult to identify and address issues before they become critical.

Recent measures have been proposed that attempt to address some of these challenges. For example, US Pat. Pub. No. 2023/0251852 discloses techniques for performing an automated region build using a version set that identifies versions of configuration files and/or artifacts with which the region build is to be performed. A Multi-Flock Orchestrator (MFO) is configured to maintain multiple version sets identifying a respective set of configuration files associated with various services to be bootstrapped. The MFO may execute a validation process using one version set.

XP093245038 (15 Feb. 2023) "Flux Documentation" discloses a Flux tool for keeping Kubernetes clusters in sync with sources of configuration (like Git repositories), and automating updates to configuration when there is new code to deploy. The Flux tool uses Kubernetes' API extension system to integrate with Prometheus and other core components of the Kubernetes ecosystem to support multi-tenancy and syncing Git repositories.

XP093245040 (22 May 2023) "How to Express Hiera Data: What It Is, Paths, and Flowcharts" discloses a Puppet utility in which a component module is a general-purpose module designed to model the configuration of a piece of technology (e.g., Apache, Tomcat or ntpd), and a profile that is an organization-specific Puppet module that describes an organization's site-specific implementation of a piece of technology.

US Pat. No. 11, 561, 784 discloses a computing system configured to receive a pipeline templates including templating expressions that can be substituted with values for generating pipelines. The pipeline can be executed to perform a set of actions associated with continuous delivery of a software artifact. The system stores sets of partially hydrated pipeline templates which can be compiled into executable pipelines associated with services configured on a datacenter of a cloud platform. The system stores different versions of pipeline templates as deployment packages and also stores version pointers that identify specific deployment packages that are selected when a software release is deployed. The version pointers allow the deployment package to be updated in case of roll back or for deploying more recent changes.

US Pat. Pub. No. 2020/0059420 discloses a method for providing a high-level topology description for a virtual computing environment to be provisioned in a plurality of computing infrastructures. The method includes transforming, by a rules engine executing on a computing device, the high level topology description to respective templates for the computing infrastructures that describes a topology for a virtual computing environment in a format that conforms to a schema that can be processed by a corresponding one of the computing infrastructures to implement the virtual computing environment in the corresponding one of the computing infrastructures, and outputting the templates for configuring the computing infrastructures.

However, none of these proposed measures provide a comprehensive solution to the noted challenges. As such, there is a need for a more efficient, automated, and scalable approach to managing infrastructure at scale.

It is, therefore, an objective of the present technology to overcome the noted challenges.

### Summary

The present technology has been designed to overcome the challenges present in prior art solutions. Accordingly, the present technology is defined by the appended set of claims.

The present processing system enables the isolation of networks by assigning data about multiple switches to a NOG master, while each NOG slave only handles data related to one specific switch. This design reduces the interconnectivity between different parts of the network, thereby minimising potential vulnerabilities and improving overall security.

### Brief description of the drawings

For a better understanding of the present technology, as well as other aspects and further features thereof, reference is made to the following description which is to be used in conjunction with the accompanying drawings, where:
FIG. 1: Figure 1 illustrates a computing infrastructure with servers and switches according to an embodiment of the present technology.
FIG. 2: Figure 2 illustrates the sequential steps of a computer-implemented method for automated deployment of at least one computing infrastructure, according to an embodiment of the present technology.
FIG. 3: Figure 3 illustrates an automated computing infrastructure deployment system, according to an embodiment of the present technology.
FIG. 4a to 4f: Figures 4a to 4f schematically illustrate steps of a computer-implemented method for automated deployment of at least one computing infrastructure, according to an embodiment of the present technology.
FIG. 5a to 5k: Figures 5a to 5k illustrate steps implemented by at least one server management module related to self-encrypting drives, according to an embodiment of the present technology.
FIG. 6: Figure 6 schematically illustrates a workflow switch configuration, according to an embodiment of the present technology.
FIG. 7a and 7b: Figures 7a and 7b schematically illustrate a multi-instances Network Operations Gateway (NOG) module, according to an embodiment of the present technology.
FIG. 8: Figure 8 illustrates the sequential flow of steps in the method for managing a fleet of distributed computing infrastructure, according to an embodiment of the present technology.
FIG. 9: Figure 9 illustrates a processing system to implement the present technology, according to an embodiment of the present technology.
FIG. 10: Figure 10 illustrates a template design according to an embodiment of the present technology.
FIG. 11: Figure 11 illustrates an example of a hierarchal fleet of computing infrastructures according to an embodiment of the present technology.

### Detailed description

The examples and conditional language recited herein are principally intended to aid the reader in understanding the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are in accordance with the scope of the appended claims. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

In the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "client device" is any computer hardware that is capable of running software appropriate to the relevant task at hand. Thus, some (non-limiting) examples of client devices include personal computers (desktops, laptops, netbooks, etc.), smartphones, and tablets, as well as network equipment such as routers, switches, and gateways. It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. This information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

The functions of the various elements shown in the figures, including any functional block labeled as a "processor" or a "graphics processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a graphics processing unit (GPU). Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

With these fundamentals in place, we will now consider some non-limiting examples to illustrate various implementations of aspects of the present technology.

In the context of the present technology, a server refers to a computer system or a specialised hardware device that provides services and resources over a network to other computers, devices, or users. Servers are typically equipped with robust processing power, large memory capacity, and extensive storage capabilities to handle intensive computational tasks and manage vast amounts of data. They run dedicated software, such as web servers, database servers, file servers, or application servers, to deliver specific functionalities and services to clients upon request. The client devices access these resources through standard communication protocols like HTTP, FTP, or TCP/IP.

In the context of this technology, a switch is a networking device that forwards and filters data packets between devices connected to it. It uses packet switching to receive, process, and forward data to other devices on the network based on their MAC or IP addresses. Switches are essential components in building and managing computer networks, enabling efficient communication between different devices within a data centre infrastructure.

According to an embodiment, the present technology relates to a method and system for managing a fleet of distributed computing infrastructures. The method comprises at least the following steps:
- deploying and configuring computing components in each computing infrastructure using automated processes;
- pulling configurations across all computing infrastructures;
- monitoring performance and resource utilization; and
- Optionally, implementing security measures to protect against unauthorized access or data breaches.

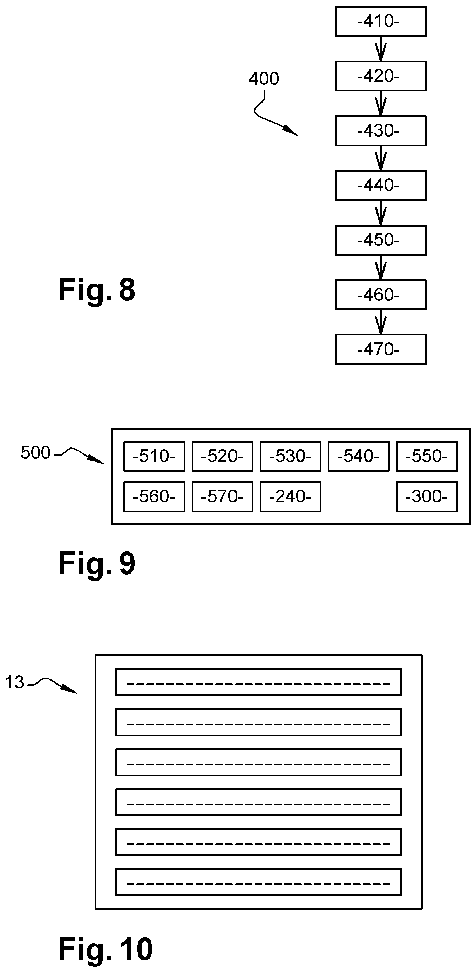

According to an embodiment, and as illustrated by figures 8, 9 and 10, the present technology relates to a computer-implemented method 400 for managing at least one fleet of computing infrastructures 10, preferably the computing infrastructure 10 being on-premise, advantageously, each computing infrastructure comprises an infrastructure orchestration module 530, the method 400 comprising:
- accessing 410 a computer-readable medium comprising instructions which, upon being operated by a processor 300, causes the execution of software components comprising:
   o A version control system module (GIT) 510;
   o A hierarchical configuration module (Hieradata) 520;
   o An infrastructure orchestration module (Kubernetes) 530;
   o A configuration module (Flux) 240;
   o Optionally, an applications packaging module (Helm/Terraform) 560;
   o An assembling module (Bazel) 570;
   o Optionally, a metric storing module (Prometheus) 540;
   o Optionally, a metric aggregator module (Thanos) 550;
- Defining computing infrastructure resources using at least one template for automated deployment and configuration of at least one component, the defining step comprising:
   o Creating at least one template of declarative configuration files, by the hierarchical configuration module, each template comprising:
      ▪ A tree structure;
      ▪ A plurality of fields, each field being multi-type and configured to comprise multiple sub-fields;
      ▪ Variables, preferably in the form of blocks configured to be hierarchized, also called "factorized", each variable having a name and being a branch of the tree structure and referencing other variables ;
   o Defining, by the configuration module, the configuration of the computing infrastructures, comprising interactions between the component and other components using the template;
- Storing and managing configuration data in therepository, preferably being a centralized repository, using the version control system module and the hierarchical configuration module, the storing and managing configuration data step comprising:
   o Writing configurations by completing at least partially the template, according to a predetermined hierarchical order;
   o Within the template, writing different variables while respecting an order of priority, preferably from the trunk of the tree structure to the leaf of the tree structure;
- Deploying and configuring the component using the assembling module, the deploying and configuring computing the component step comprising:
   ∘ Assigning a number of variables to each environment, the variables comprising at least one tag;
   o Declaring each computing infrastructure by its tags;
   o Retrieving the template;
   o Generating at least one declarative configuration file for each computing infrastructure, using the hierarchical configuration module, by filling the retrieved template for each computing infrastructure:
      ▪ Resolving all variables of the template given the tag of the computing infrastructure;
      ▪ Creating at least one artifact comprising the declarative configuration file of the computing infrastructure;
      ▪ Placing the artifact in the repository, using the version control system module.
- For each computing infrastructure, pulling, using its configuration module, the artifact from the repository and applying the artifact:
   o At predetermined intervals, preferably regular, the configuration module reads artifacts and propagates changes to a computing infrastructure;
- Optionally, monitoring performance and resource utilization using the metric storing module and the metric aggregator module:
   ∘ Each configuration module exposing metrics on actions, status, and duration of actions;
   o The metric storing module storing these metrics locally for a first period (n days);
   o Metrics consolidated at a central computing infrastructure (DC0), providing an overall view of the status of all computing infrastructures;
   o The metric aggregator handling the storage for a second period, higher than the first period (n years).
- Optionally, implementing security measures for access control and encryption keys using the version control system module:
   o Each environment having a branch in the repository.

According to an embodiment, the version control system module 510 is configured to:
- Store and manage at least one configuration file for each computing infrastructure 10;
- Enable branching and merging of configuration files;
- Provide a history of all changes made to the configuration files;
- Enable access control and permissions management;

According to an embodiment, the hierarchical configuration module 520 is configured to:
- Write, store and manage configuration data in a hierarchical manner;

According to an embodiment, the infrastructure orchestration module 530 (Kubernetes), the infrastructure orchestration module being configured to:
- Deploy and manage containerized applications using declarative configuration files (manifests) that define a predetermined state of each application and its dependencies;
- Automatically scale applications based on resource utilization and demand;
- Automatically restart containers that fail or become unresponsive, and
- Distribute traffic across multiple replicas for load balancing and fault tolerance;

According to an embodiment, the metric storing module 540 is configured to:
- Collect metrics from monitored computing infrastructure components;
- Store metrics in a time series database for later querying and analysis, with a predetermined retention period;
- Provide a web interface for visualizing and exploring metrics data;
- Enable automated discovery of new computing infrastructure components by periodically scanning the network for new services and endpoints;
- Support alerting based on predefined rules;

According to an embodiment, the metric aggregator module 550 is configured to:
- Collect and aggregate metrics from multiple metric storing module instances running in each computing infrastructure;
- Store metrics using a combination of local storage and remote object storage;
- Enable automated data retention policies based on predefined rules;
- Enable automated backups and restores of the metrics data;

According to an embodiment, the configuration module 240 is configured to:
- Monitor the configuration repository for changes and detect when new configurations are pushed;
- Pull the updated configurations from the repository and validate their syntax and semantics;
- Apply the updates to the target computer infrastructure using an orchestrated deployment strategy;

According to an embodiment, the applications packaging module 550 is configured to:
- Package applications and their dependencies into reusable templates designed to be installed and upgraded across multiple computing infrastructures in the fleet;
- Use values files to customize the configuration of each installation based on specific requirements of each computing infrastructure;
- Support dependency management;
- Define infrastructure components using declarative configuration files;
- Enable automated computing infrastructure deployment and configuration;

According to an embodiment, the assembling module 560 is configured to:
- Define dependencies between different components and libraries;
- Use a single build file to define the entire build process, including compilation, testing, and deployment steps.

According to an embodiment, managing a fleet of distributed computing infrastructures comprises at least the following sub-steps:
- Deploying and Configuring Computing Components: this step involves deploying and configuring components in each computing infrastructure 10 of the distributed computing infrastructures using automated processes. This can be achieved through various means such as containerization, virtualization, or infrastructure as code (IaC) tools like Terraform or CloudFormation. Automated configuration management tools like Puppet, Chef, or Ansible can also be used to ensure consistent and repeatable configurations across all computing infrastructures 10.
- Pulling Configurations: this step involves pulling configurations across all computing infrastructures of the distributed computing infrastructures. This can be done using a centralized configuration management system like Git or a distributed configuration management tool like Consul or Etcd. By maintaining a single source of truth for configurations, it becomes easier to manage and update configurations across all computing infrastructures in a consistent manner.
- Optionally, Monitoring Performance and Resource Utilization: This optional step involves monitoring performance and resource utilization of each computing infrastructure in real-time. This can be achieved through various means such as using monitoring tools like Prometheus, Grafana, or Nagios to collect and visualize metrics on CPU usage, memory usage, network traffic, and other relevant performance indicators. By continuously monitoring the health and performance of each computing infrastructure, it becomes easier to identify and address issues before they escalate into major problems.
- Optionally, Implementing Security Measures: tis optional step step involves implementing security measures to protect against unauthorized access or data breaches. This can be done through various means such as using firewalls, intrusion detection systems (IDS), encryption keys, and access control mechanisms like RBAC or IAM. By implementing robust security measures across all computing infrastructures, it becomes easier to secure sensitive data and prevent unauthorized access or data breaches.
- Providing Optional Features: The present technology also provides additional features such as logging, monitoring, auditing, and key management for distributed key management and auditing. These features enable businesses to maintain a comprehensive log of all activities across their computing infrastructure, monitor user activity, ensure compliance with regulatory requirements, and manage encryption keys securely.

According to an embodiment, and in the context of the present technology, an artifact refers to a software support for data.

According to an embodiment, and in the context of the present technology, a component can be a software module and/or a hardware module, the hardware module being possibly controlled by a software module.

According to an embodiment, the present technology enables efficient utilization of resources by managing a fleet of distributed computing infrastructures, reduces the risk of data loss or downtime due to hardware failure or natural disasters at any single location, allows for load balancing and automatic failover, ensures high availability and reliability of data processing and storage, supports dynamic scaling of resources based on demand, enhances overall system performance through effective monitoring and control, and enables seamless integration with various cloud services and on-premises infrastructure.

The present technology provides a method and system for managing a fleet of distributed computing infrastructures that enables efficient utilization of resources, reduces the risk of data loss or downtime due to hardware failure or natural disasters at any single location, allows for load balancing and automatic failover, ensures high availability and reliability of data processing and storage, supports dynamic scaling of resources based on demand, enhances overall system performance through effective monitoring and control,. The method and system can be implemented using a combination of tools such as Kubernetes, Prometheus, Git, Hieradata, Flux, Helm, Terraform, Thanos, Bazel, and other relevant tools to manage the deployment, configuration, monitoring, security, and scaling of distributed computing infrastructures.

According to an embodiment, the version control system module (GIT) 510 is configured to store and manage configuration files for each computing infrastructure. This module 510 enables branching and merging of configuration files, provides a history of all changes made to the configuration files, and supports access control and permissions management.

According to an embodiment, the hierarchical configuration module (Hieradata) 520 is configured to write, store, and manage configuration data in a hierarchical manner. This module 520 supports nested data structures, allowing for complex templates with multiple levels of sub-fields or sub-templates. Variables are also supported as blocks of code themselves, which can then be used within templates and other Hiera configurations to increase factorization. Figure 10 illustrates an example of such a template 13, according to an embodiment of the present technology.

According to an embodiment, the infrastructure orchestration module (Kubernetes) 530 is configured to deploy and manage containerized applications using declarative configuration files that define the predetermined state of each application and its dependencies. This module 530 automatically scales applications based on resource utilization and demand, restarts containers that fail or become unresponsive, and distributes traffic across multiple replicas for load balancing and fault tolerance.

According to an embodiment, the metric storing module (Prometheus) 540 is configured to collect metrics from monitored computing infrastructure components and store them in a time series database for later querying and analysis. This module 540 can provide a web interface for visualizing and exploring metrics data, supports automated discovery of new computing infrastructure components by periodically scanning the network for new services and endpoints, and enables alerting based on predefined rules. Each flux exposes metrics on actions, status, and duration of actions, which are stored locally for a short period by the metric storing module 540 and preferably can be consolidated at a central computing infrastructure, called a primary data center DC1, using the metric aggregator module 550.

According to an embodiment, the metric aggregator module (Thanos) 550 is configured to collect and aggregate metrics from multiple Prometheus instances running in each computing infrastructure and store them using a combination of local storage and remote object storage. This module 550 enables automated data retention policies based on predefined rules.

According to an embodiment, the configuration module (Flux) 240 is configured to monitor the configuration repository for changes and detect when new configurations are pushed. It pulls the updated configurations from the repository and can validate their syntax and semantics before applying them to the target computer infrastructure using an orchestrated deployment strategy.

According to an embodiment, the applications packaging module (Helm/Terraform) 560 is configured to package applications and their dependencies into reusable templates designed to be installed and upgraded across multiple computing infrastructures in the fleet. This module 560 uses values files to customize the configuration of each installation based on specific requirements of each computing infrastructure, supports dependency management, defines infrastructure components using declarative configuration files, and enables automated computing infrastructure deployment and configuration.

According to an embodiment, the assembling module (Bazel) 570 is configured to define dependencies between different components and libraries, use a single build file to define the entire build process, including compilation, testing, and deployment steps, and defining infrastructure resources using templates for automated deployment and configuration of computing components.

Preferably, the defining step comprises:
- creating templates of declarative configuration files, each template comprising a tree structure, a plurality of fields, variables in the form of blocks configured to be factorized, and
- defining the configuration of the computing infrastructure, including interactions between devices using these templates.

Advantageously, storing and managing configuration data in a centralized repository is achieved using the version control system module 510 and the hierarchical configuration module 520, where configurations are written by completing at least partially considered templates according to a predetermined hierarchical order within each considered template.

The distributed architecture allows for load balancing and automatic failover, ensuring high availability and reliability of data processing and storage. Effective monitoring and control of each computing infrastructure in the fleet are facilitated through this method, allowing for real-time identification and resolution of issues before they escalate into major problems. This proactive approach minimizes downtime and enhances overall system performance. The method supports dynamic scaling of resources based on demand, ensuring optimal use of computing power, storage capacity, and network bandwidth. This flexibility enables businesses to adapt quickly to changing requirements and accommodate growth without the need for costly infrastructure upgrades. Security is enhanced through the management of a fleet of distributed computing infrastructures as it allows for the implementation of advanced security measures across multiple locations. Data can be replicated and encrypted, reducing the risk of unauthorized access or data loss.

The method enables seamless integration with various cloud services and/or on-premises infrastructure, providing businesses with the flexibility to choose the best deployment model for their specific needs. It also supports hybrid cloud environments, allowing for the efficient management of both public and private resources. The distributed nature reduces latency and improves response times by bringing data processing closer to the end-users, resulting in a better user experience and increased productivity for applications that require real-time data processing.

According to an embodiment, multiple declarative configuration files can be utilized to describe an application. Each of these declarative configuration files forms part of a plurality and includes common values. Preferably, the method 400 can involve defining a set of configurations for an application using a collection of declarative configuration files. These files collectively provide instructions on how the application should behave under various conditions. Advantageously, having multiple declarative configuration files with common values allows for easier maintenance and modification of the application's configurations. Changes to common values can be made in one file, which will automatically update the other files that share those values. This reduces the need for manual updates across multiple files and minimizes potential errors.

Moreover, this approach promotes modularity and flexibility in managing application configurations. Developers can easily add, remove, or modify configuration settings without affecting the entire configuration structure. Additionally, it simplifies the process of deploying applications to different environments by allowing for customized configurations while maintaining a consistent base of common values.

According to an embodiment, each declarative configuration file may contain specific instructions tailored to particular aspects of the application or environment. However, at least some of them, and preferably all of them, share the common values that are essential for the proper functioning of the application. This approach ensures consistency and standardization across various configurations while still allowing for customization where necessary.

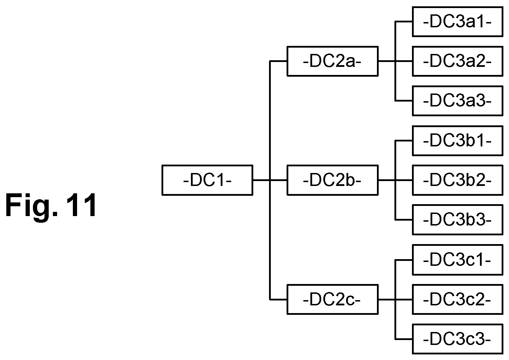

According to an embodiment, an as illustrating by figure 11, the fleet of computing infrastructures 10 can comprise multiple levels. For example, at a primary level, there exists a computing infrastructure, denoted as DC1, responsible for managing a group of secondary computing infrastructures 10, denoted DC2a, DC2b an DC2c, for example.

Advantageously, each secondary computing infrastructure DC2a, DC2b, DC2c, is configured to manage one or more tertiary computing infrastructures, denoted DC3aX, DC3bX and DC3cX, X being a number greater or equel to one. This hierarchical arrangement allows for efficient resource allocation and centralized control over the entire fleet of computing infrastructures.

Preferably, DC1 communicates with each secondary infrastructure DC2a, DC2b, DC2c to monitor their performance, allocate resources, and enforce security policies. In turn, each secondary infrastructure DC2a, DC2b, DC2c manages its assigned tertiary infrastructures DC3aX, DC3bX and DC3cX, ensuring they operate optimally while adhering to the guidelines set by the secondary infrastructure.

This multi-tiered architecture provides several technical advantages. First, it enables scalability as new computing infrastructures can be easily added or removed at any level without affecting the entire system. Second, it can be configured to enhance fault tolerance since failures in one tier do not necessarily impact the entire fleet. Lastly, it improves overall performance by allowing for load balancing and task distribution across multiple levels of computing infrastructure.

According to an embodiment, the method involves managing and orchestrating the configuration of a primary computing infrastructure DC1, as well as secondary DC2a, DC2b, DC2c and tertiary DC3aX, DC3bX and DC3cX computing infrastructures within a fleet. Preferably, DC1 is configured to replicate data to these additional computing infrastructures.

In more detail, and according to an embodiment, DC1 serves as the central point for managing and coordinating all computing activities across the fleet (secondary and tertiary computing infrastructures included). This configuration allows for efficient and consistent management of the entire computing infrastructure. Additionally, data replication to secondary and tertiary computing infrastructures can be implemented to ensure redundancy and disaster recovery capabilities.

Advantageously, this setup enables seamless scaling and flexibility as new computing infrastructures can be easily integrated into the fleet and managed by DC1. Furthermore, having a centralized management system for all computing infrastructures simplifies maintenance tasks and reduces potential errors or inconsistencies that may arise from managing each infrastructure individually.

Preferably, the data replication occurs automatically and in real-time, ensuring that the most up-to-date information is always accessible on the connected data centers.

According to an embodiment, the present technology comprises configuring each tertiary computing infrastructure to process and store data locally. This feature allows for local processing and storage of data in the tertiary computing infrastructure.

Advantageously, data can be replicated from each tertiary computing infrastructure to the secondary computing infrastructure for backup and disaster recovery purposes. This redundancy ensures that data is protected and can be recovered in case of a failure or disaster affecting the primary or tertiary computing infrastructure.

According to an embodiment, the present technology relates to a processing system 500 for automated management of a fleet of computing infrastructures. This system 500 comprises a processor 300, a computer-readable medium storing instructions that, upon being executed by the processor 300, causes the execution of software components.

According to the embodiment, the processing system 500 comprises at least:
- a processor 300;
- a computer-readable medium comprising instructions which, upon being operated by the processor (300), causes the execution of software components comprising:
   o A version control system module (GIT) 510
   o A hierarchical configuration module (Hieradata) 520;
   o An infrastructure orchestration module (Kubernetes) 530;
   o A configuration module (Flux) 240;
   o Optionally, an applications packaging module (Helm/Terraform) 560;
   o An assembling module (Bazel) 570;
   o Optionally, a metric storing module (Prometheus) 540:
   o Optionally, a metric aggregator module (Thanos) 550.

Preferably, the version control system module (GIT) 510 is configured to store and manage at least one configuration file for each computing infrastructure. GIT enables branching and merging of configuration files, provides a history of all changes made to the configuration files, and implements access control and permissions management. Security measures for access control and encryption keys are also implemented.

Advantageously, the hierarchical configuration module (Hieradata) 520 is configured to write, store, and manage configuration data in a hierarchical manner. Hieradata creates templates 13 of declarative configuration files, each template 13 comprising at least one tree structure and a plurality of fields. Each field can be multi-type and configured to comprise multiple sub-fields. Variables, preferably in the form of blocks, are configured to be factorized, with each variable being a branch of the at least one tree structure and referencing other variables. Hieradata writes configurations by completing at least partially considered templates according to a predetermined hierarchical order. Within each considered template 13, different variables are written while respecting an order of priority, from the trunk of the tree structure to the leaf of the tree structure.

According to an embodiment, the infrastructure orchestration module (Kubernetes) is configured to deploy and manage containerized applications using declarative configuration files that define a predetermined state of each application and its dependencies. Kubernetes automatically scales applications based on resource utilization and demand, automatically restarts containers that fail or become unresponsive, and distributes traffic across multiple replicas for load balancing and fault tolerance.

According to an embodiment, the metric storing module (Prometheus) 540 is configured to collect metrics from monitored computing infrastructure components and store them in a time series database for later querying and analysis, with a predetermined retention period. Prometheus provides a web interface for visualizing and exploring metrics data and enables automated discovery of new computing infrastructure components by periodically scanning the network for new services and endpoints. Support for alerting based on predefined rules, automated backups and restores of the metrics data, and monitoring performance and resource utilization are also provided.

According to an embodiment, the metric aggregator module (Thanos) 550 is configured to collect and aggregate metrics from multiple Prometheus instances running in each computing infrastructure and store them using a combination of local storage and remote object storage. Thanos enables automated data retention policies based on predefined rules and monitors performance and resource utilization.

According to an embodiment, the configuration module (Flux) 240 is configured to monitor the configuration repository for changes and detect when new configurations are pushed, pull the updated configurations from the repository and validate their syntax and semantics, apply the updates to the target computer infrastructure using an orchestrated deployment strategy, and define the configuration of the computing infrastructure, including interactions between devices using templates.

According to an embodiment, the applications packaging module (Helm/Terraform) 560 is configured to package applications and their dependencies into reusable templates designed to be installed and upgraded across multiple computing infrastructures in the fleet. Helm/Terraform uses values files to customize the configuration of each installation based on specific requirements of each computing infrastructure, supports dependency management, defines infrastructure components using declarative configuration files, enables automated computing infrastructure deployment and configuration, and integrates with other tools and workflows for managing the orchestration and reconciliation of each data center.

According to an embodiment, the assembling module (Bazel) 570 is configured to define dependencies between different components and libraries, use a single build file to define the entire build process, including compilation, testing, and deployment steps, deploy and configure computing components, and integrate with other tools and workflows for automating the continuous integration and deployment process.

According to an embodiment, the system 500 further comprises a processing sub-system 200 described hereafter. The processing sub-system 200 can comprise several components such as a deployment module 220, a configuration management database (CMDB) 210, a server management module 270, a key management module 280, a communication module 230, etc....

According to an embodiment, the deployment module 220 can be configured to deploy un-provisioned servers and manage their lifecycle using tools like Kubernetes or Docker Swarm. It can also integrate self-encrypting drives for automatic encryption key management and secure boot technology to ensure the security of each server.

According to an embodiment, The CMDB module 210 can be configured to manage the distributed computing infrastructure by storing and managing configuration data in a hierarchical manner using tools like Hieradata or Puppet. It can also support dynamic evaluation of configuration data based on the current environment or runtime conditions, allowing for flexible and adaptive infrastructure management.

According to an embodiment, the server management module 270 can be integrated within the CMDB module 210 to manage the computing infrastructure 10 by initializing the CMDB module 210, ensuring compliance of the fleet of distributed computing infrastructures, and providing a client interface that allows a user to manage a corresponding computing infrastructure 10 from the distributed computing infrastructures with which the client is associated.

According to an embodiment, the key management module 280 can be configured to securely store passwords and/or encryption keys using tools like Hashicorp's Vault or AWS KMS, for example. It can also be designed to support advanced features such as multi-factor authentication, access control policies, and auditing to ensure the security of encryption keys.

According to an embodiment, the present technology comprises also an automated deployment phase 100 of at least one computing infrastructure scalable from a few servers to a data centre of up to 100 racks, for example, without any limitation. The smallest deployment starts with one server for control and one switch. The present technology provides ready-for-provision multi-tenants BareMetal instances, i.e. un-provisioned servers, supporting any operating system with private networking inside each tenant.

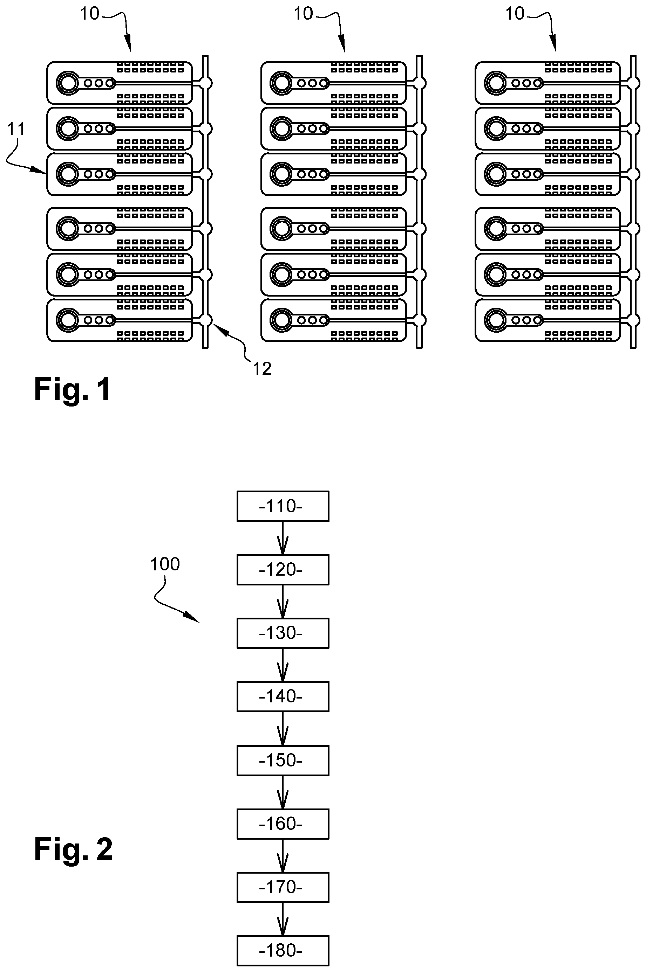

According to an embodiment, and as illustrated by Figures 1 and 2, the present technology comprises a computer-implemented phase 100 for automated deployment of at least one computing infrastructure 10, also called a data centre. This computing infrastructure 10 comprises at least one un-provisioned server 11 and at least one switch 12. The phase 100 comprises several, preferably interconnected, components configured to work together to deploy and manage the computing infrastructure 10 in an autonomous manner. Advantageously, the phase100 is executed after the pulling step 450.

As illustrated by Figures 2, 3 and 4a to 4f, according to an embodiment, the computer-implemented phase 100 comprises at least the following steps:
- accessing 110 a computer-readable medium, the computer-readable medium comprises preferably instructions which, upon being operated by a processor 300, causes the execution of software components. Advantageously, the software components comprise at least:
   o a Configuration Management DataBase (CMDB) 210, also called Netbox;
   o a deployment module 220, also called OpenStack;
   o a communication module 230, also called Dicious;
   o a configuration module 240, also called Flux;
   o a Network Operations Gateway module 250, also called NOG;
   o a Domain Name System module 260, also called DNS module or DNSMasq;
   o Optionally, a server management module 270, also called Ironic;
   o Optionally, a key management module 280, also called Barbicane;
   o Optionally, a network virtualisation and orchestration module 290, also called Neutron.
- calculating 120 at least one artifact comprising data for initialising the CMDB module 210, the calculated data comprising at least one Internet Protocol (IP) address of the at least one switch 12; Preferably, the calculating step is executed using the hierarchical configuration module 520 and the assembling module 570; Advantageously, the calculating step is executed within the step of defining 420 computing infrastructure resources, executed by the assembling module 570;
- initialising 130, by the configuration module 240, at least a part of the software components, by:
   o initializing the CMDB module 210 using the calculated data; and
   o configuring the DNS module 260 with configurations from the CMDB module 210;
- determining 140, using the CMDB module 210, configurations for:
   o the communication module 230 on at least one Intelligent Platform Management Interface (IPMI) and on at least one management network; and
   o the switch 12 being configured to allow its provisioning based on the calculated data from the CMDB module 210;
- provisioning 150 at least one network stack, i.e. at least the un-provisioned server 11, with provisioning data from the CMDB module 210, the provisioning data comprising data relating to network devices, interfaces, networks and the configurations determined by the CMDB module 210, the provisioning comprising:
   o provisioning the DNS module 260;
   o provisioning the NOG module 250;
- declaring 160 at least one network in the deployment module 220;
- synchronizing 170 the deployment module 220 with the CMDB module 210 to start a server discovery process by the deployment module 220 using the communication module 230; and
- booting 180 the at least one un-provisioned server 11 to be discovered by the deployment module 220.

According to an embodiment, each module is an application related to at least one template defined by variables in the configuration module 240.

Preferably, the configuration management database module 210 is an application related to at least one template defined by variables in the configuration module 240.

Preferably, the deployment module 220 is an application related to at least one template defined by variables in the configuration module 240.

Preferably, the communication module 230 is an application related to at least one template defined by variables in the configuration module 240.

Preferably, the network operation gateway module 250 is an application related to at least one template defined by variables in the configuration module 240.

Preferably, the domain name system module 260 is an application related to at least one template defined by variables in the configuration module 240.

According to an embodiment, the CMDB module 210, Netbox for example, is configured to manage and store inventory data relating to the un-provisioned server 11 and switch 12. Netbox 210 is initialized with information about the switches 12 and their configurations using the configuration module 240, Flux for example. This initialisation process involves calculating data for initialising Netbox 210, which comprises at least one IP address of the switch 12.

According to an embodiment, the primary functions of the CMDB module 210 comprise:
- Managing and storing inventory data: the CMDB module 210 maintains comprehensive information about various components of the data centre infrastructure 10, such as servers 11, switches 12, interfaces, VLANs, regions, and configuration templates;
- Pre-generating YAML files: the CMDB module 210 calculates the necessary data to configure network equipment and generates pre-filled YAML files. These YAML files contain the required information to configure the network devices automatically;
- Initializing software components: Upon receiving the pre-filled response file, the CMDB module 210 initialises specific software components like DHCP services on IPMI and management networks, switches, and the Domain Name System (DNS) services;
- Configuration synchronisation: When a change is made to the network configuration in the CMDB module 210, the CMDB module 210 propagates the updated information to all connected controllers through well-defined APIs or communication mechanisms. This ensures that all controllers have up-to-date information about the network infrastructure.

According to an embodiment, the deployment module 220, OpenStack for example, is configured to deploy the computing infrastructure 10. OpenStack 220 communicates with Netbox 210 using the communication module 230, Dicious for example.

According to an embodiment, the primary functions of the deployment module 220 comprise:
- Deployment of computing infrastructure: the deployment module 220 is configured to deploy the computing infrastructure 10, comprising servers 11 and networking components, based on the configuration data provided by other modules like the CMDB module and the configuration module (Flux);
- Virtual network creation: the deployment module 220 comprises at least one component, the network virtualisation and orchestration component 290, configured to create virtual networks necessary for managing server communications and various network interfaces within the computing infrastructure 10;
- DHCP interface management: the deployment module 220 is configured to manage Dynamic Host Configuration Protocol (DHCP) interface modules, like DNS module 260 for example, to assign IP addresses and other relevant configurations to servers during the discovery process.
- Server discovery and enrollment: the deployment module 220 is configured to discover new servers, i.e. un-provisioned servers 11, when they boot up, to enroll them into the processing sub-system 200, and to make them manageable by users.
- Synchronization with Netbox: the deployment module 220 is configured to synchronise its configuration data with the CMDB module 210, to ensure consistency between physical and virtualized network configurations.
- Power management: the deployment module 220 is configured to manage power states of servers to ensure they are ready for deployment or maintenance activities.
- Image deployment: the deployment module 220 is configured to deploy operating system images and other necessary configurations to newly added servers, i.e. un-provisioned servers 11, ensuring consistency and minimizing downtime.
- Provisioning: the deployment module 220 is configured to provision new servers with the appropriate network configurations, allowing them to integrate seamlessly into the existing computing infrastructure 10. This includes configuring virtual interfaces, IP addresses, and routing tables.
- Network reconfiguration: When there is a change in the network configuration in the CMDB module 210, the deployment module 220 automatically reconfigures the virtual networks and other network components as needed to maintain consistency with the physical network.

According to an embodiment, the communication module 230 is configured to manage at least one Dynamic Host Configuration Protocol (DHCP) interface module 260, such as DNSmasq for example. The communication module 230 is configured to allow the communication between Netbox 210 and OpenStack 220, allowing the exchange of necessary configuration data.

According to an embodiment, the configuration module 240 is configured to initialize the CMDB module 210 with information relating to the at least one switch 12 and its configuration.

According to an embodiment, one of the primary functions of the configuration module 240 is to initialise the CMDB module 210 with information relating to the network infrastructure, including switches 12 and their configurations. More specifically, the configuration module 240 can perform the following tasks:
- Initializing the CMDB module 210: The configuration module 240 is configured to initialise the CMDB module 210 by providing it with necessary data such as IP addresses of switches 12, interfaces, VLANs, region names, and configuration templates. This data is calculated based on predefined rules and stored in the configuration module 240.
- Provisioning network devices: The configuration module 240 is configured to provision network devices like switches 12 by pushing their configurations to them after they have been booted up. It does this by utilising rendered configurations obtained from the CMDB module 210 for DHCP services on IPMI and management networks, as well as for switch provisioning.
- Synchronizing with the deployment module 220: The configuration module 240 is configured to synchronise with the deployment module 220 to start the server discovery process. This synchronisation ensures that all network configurations are consistent between the physical infrastructure managed by the CMDB module 210 and the virtual networks managed by the deployment module 220.
- Managing IP addresses: The configuration module 240 is configured to manage IP addresses in the computing infrastructure 10 by pre-calculating all required IP addresses based on a set of rules, such as template, subnet mask and number of hosts per subnet, for example. It then stores and transmits these calculated IP addresses to the appropriate components in the network through the communication device 230.

According to an embodiment, the Network Operations Gateway (NOG) module 250 is configured to pilot the switch 12 by receiving configuration data from the CMDB module 210 and applying the received configurations to the switch 12. This process ensures that the switch 12 is properly configured based on the data stored in the CMDB module 210.

According to an embodiment, the primary functions of the NOG module 250 comprise:
- Receiving configurations from the CMDB module 210: The NOG module 250 is configured to receive configuration data from the CMDB module 210, which comprises information about switches 12, interfaces, VLANs, and other networking components.
- Applying received configurations to network devices: Once the NOG module 250 receives the configurations from the CMDB module 210, it is configured to apply these configurations to the corresponding network devices, ensuring that they are properly configured according to the desired settings.
- Piloting switches: The NOG module 250 is responsible for managing and controlling switches 12 in the computing infrastructure 10. It can pilot switches 12 by receiving configurations from the CMDB module 210 and applying them to the switches 12, allowing for efficient and automated network management.
- Communication with other modules: The NOG module 250 is configured to communicate with other components of the present technology, such as the deployment module 220 and the communication module 230 for example, to ensure seamless integration and coordination between different parts of the computing infrastructure 10.
- Ensuring network security: The NOG module 250 is configured to maintain network security by applying configurations that adhere to security policies and best practices, ensuring that the data centre infrastructure remains protected against potential threats.

According to an embodiment, the Domain Name System (DNS) module 260 is configured to manage the DNS services in the computing infrastructure. The DNS module 260 is provisioned using data from the CMDB module 210, which comprises configurations for the communication module 230 on IPMI and management networks.

According to an embodiment, the Intelligent Platform Management Interface (IPMI) is a standard interface for managing and monitoring computer servers, particularly out-of-band, directly at the hardware level. It enables remote access to various system management features such as power control, temperature monitoring, fan speed control, and BIOS settings. IPMI uses its own dedicated network interface and protocol, allowing administrators to manage servers even when they are not in an active operating system state or when there is a network outage.

According to an embodiment, the server management module 270 comprises at least:
- a control plane component configured to discover and present servers 11, preferably un-provisioned servers, to the deployment module 220 as compute resources, and further configured to integrate encryption;
- a management module (IPA), embedded in an operating system, configured to communicate with the control plane to perform encryption and decryption tasks, manage disks, and establish communication with the control plane.

According to an embodiment, the server management module 270 is configured to manage and integrate un-provisioned servers 11 into the computing environment managed by the deployment module 220. Preferably, its primary functions comprises:
- Discovering and presenting servers 11 to the deployment module 220 as compute resources: its control plane component is responsible for discovering and presenting unprovisioned servers 11 to the deployment module 220, making them available as compute resources.
- Integrating self-encrypting drives (SEDs): the server management module 270 includes a mechanism for managing and integrating Self-Encrypting Drives (SEDs) into the server management process. This ensures that data remains secure by encrypting the drives before they are deployed into the computing infrastructure 10.
- Managing encryption keys: the server management module 270 is configured to manage encryption keys assigned to each host, disk, or client in the computing infrastructure 10 and uses the key management module 280 to manage these keys.
- Secure boot: the server management module 270 supports secure boot for the computing infrastructure 10 components by generating unique signatures for operating system images, storing them in the key management module 280, and validating that only signed operating system images are loaded during server boot.
- Communication with IPA: The management module IPA embedded in an operating system communicates with the control plane to perform encryption and decryption tasks, manage disks, and establish communication with the control plane.

According to an embodiment, the key management module 280 is configured to manage encryption keys for data protection. Its primary functions can comprise:
- Managing encryption keys: the key management module 280 is configured to store and manage encryption keys for various components of the computing infrastructure 10, such as servers 11, disks, and clients. It ensures that only authorized users have access to these keys.
- Securely storing keys: the key management module 280 is configured to use secure storage mechanisms to store encryption keys, ensuring that they are protected against unauthorized access or theft.
- Key rotation: the key management module 280 is configured to support key rotation, which is the process of periodically replacing old encryption keys with new ones to enhance security.
- Integration with other modules: the key management module 280 is configured to integrate with other components of the present technology to manage encryption keys for these modules and ensure secure communication between them.
- Key access control: the key management module 280 is configured to provide fine-grained access control for encryption keys, allowing administrators to grant or deny access based on specific roles or users.
- RESTful API: the key management module 280 is configured to offer a RESTful API that enables easy integration with other components of the present technology and external applications.
- Support for multiple key types: the key management module 280 is configured to support various types of encryption keys, such as RSA, AES, and ECDSA, to cater to different use cases and requirements.
- Key versioning: the key management module 280 is configured to maintain a record of key versions, allowing administrators to roll back to previous versions if needed.

According to an embodiment, the network virtualisation and orchestration module 290 is configured to manage and configure virtual networks within the computing infrastructure 10. Its primary functions can comprise:
- Creating and managing virtual networks: the network virtualisation and orchestration module 290 is configured to enable the creation and management of virtual networks, subnets, routers, firewalls, load balancers, and other related networking components within the deployment module 220.
- Virtual Local Area Network (VLAN) configuration: the network virtualisation and orchestration module 290 is configured to configure VLANs for network interfaces during the server discovery process to ensure proper communication between servers 11 and network devices.
- Dynamic Host Configuration Protocol (DHCP) services: the network virtualisation and orchestration module 290 is configured to manage DHCP services, which assign IP addresses and other relevant configurations to servers 11 during the discovery process.
- Network security: the network virtualisation and orchestration module 290 is configured to provide networking security features such as firewalls, security groups, and access control lists to protect the virtual network infrastructure from unauthorized access or attacks.
- Load balancing: the network virtualisation and orchestration module 290 is configured to offer load balancing capabilities to distribute network traffic across multiple servers for improved performance and availability.
- Network automation: the network virtualisation and orchestration module 290 is configured to automate various networking tasks, such as configuring interfaces, creating subnets, and managing routing tables, to simplify the deployment and management of virtual networks.
- Integration with other modules: the network virtualisation and orchestration module 190 is configured to integrate with other components of the present technology, including the CMDB module 210, and the Network Operations Gateway module (NOG) 250, to ensure seamless communication and coordination between different parts of the computing infrastructure 10.

According to an embodiment, the present technology also comprises calculating 120 data for initializing the CMDB module 210 and configuring at least a part of the software components using the configuration module 240.

According to an embodiment, the present technology also comprises:
- initialising the CMDB module 210 with the calculated data,
- configuring DNS module 260 with configurations from the CMDB module 210,
- determining configurations for the communication module 230, and
- configuring the switch 12 to allow its provisioning based on the calculated data from the CMDB module 210.

According to an embodiment, at least one network stack is provisioned using provisioning data from the CMDB module 210.

Preferably, this provisioning process involves:
- provisioning the DNS module 260, and the Network Operations Gateway (NOG) module 250,
- declaring at least one network in the deployment module 220, and
- synchronizing the deployment module 220 with the CMDB module 210 to start a server discovery process using the communication module 230.

According to an embodiment, the un-provisioned server 11 is booted to be discovered by the deployment module 220. Once the server 11 is discovered, it becomes manageable by at least one user.

According to an embodiment, the discovery process of a new server 11, i.e. a new un-provisioned server, comprises at least three steps: Initialization, Discovery, End of discovery.

Preferably, during the initialisation step of the discovery process, the new server 11 is powered off and unknown to both the deployment module 220 and the Configuration Management Database (CMDB) module 210. Network interfaces on the new server 11 are then configured in a discovery virtual local area network mode (VLAN) by the network virtualization and orchestration component 290. Once the new server 11 is powered on, it boots through the network and loads an agent that analyzes the hardware and generates a report. This report is sent to the deployment module 220, which synchronises the information with the CMDB module 210 using the communication module 230.

Preferably, in the discovery step, the new server's hardware is analyzed by the agent, and its configuration data is reported back to the deployment module 220. The deployment module 220 uses this information to create virtual networks, ports, and other necessary configurations for the new server. Once all configurations are in place, the new server 11 becomes discoverable and manageable by the user.

Preferably, during the end of discovery step, the network interfaces are unconfigured from the Discovery VLAN using the network virtualization and orchestration component 290 and put in an isolation mode, i.e. in quarantine. This is done to ensure security by preventing unauthorised access to the newly discovered server. Advantageously, if a server 11 is deleted from the deployment module 220 database, the corresponding entry in the CMDB module 210 will also be deleted, and the discovery process will be set back for that server 11. This step helps maintain an accurate inventory of servers and their configurations within the data center infrastructure.

Preferably, the discovery process also involves managing IP addresses within the computing infrastructure 10. Pre-calculated IP addresses based on a set of rules such as template, subnet mask and number of hosts per subnet are stored and transmitted to the appropriate components in the network through the communication device 230. Each IP address is related to a template associated with a specific function within the computing infrastructure 10. This dynamic process ensures that all new servers 11 and switches 12 are assigned unique IP addresses, enabling seamless integration into the computing infrastructure 10 network.

The present technology focuses on an innovative method for deploying and managing data centres through autonomous initialisation and configuration processes. The approach encompasses several aspects, which include:
- Initialization of Data Center Networks: This aspect concerns the automatic initialisation of network configurations in a data centre, preferably using pre-generated YAML files that can contain the necessary information to configure network equipment.
- Control Mechanism for Request Instantiation and Real vs. Logical Configuration Comparison (Ironic and Netbox): This qspect revolves around the control mechanism that enables request instantiation in a data centre by comparing real configurations with their logical counterparts using tools like a server management module (Ironic) and the CMDB module (Netbox).
- Execution of Configuration in Parallel (Ironic): This aspect involves the parallel execution of configuration tasks using the server management module (Ironic) when a new server is added to the data center.
- Method of Synchronization of Several Controllers (Netbox, OpenStack): This aspect deals with synchronizing multiple controllers in a data center environment, specifically the CMDB module Netbox and the deployment module OpenStack, to maintain consistency between the physical network configuration and the virtualized network configurations managed by OpenStack.
- Provisioning of Configuration of Equipment in Parallel (Netbox, OpenStack): This fifth technology involves the parallel provisioning of configurations for multiple pieces of equipment in a data center using Netbox and OpenStack to quickly integrate new equipment into the existing infrastructure without causing unnecessary downtime or configuration conflicts.

The present technology also includes an optional aspect for encryption for data protection using Self-Encrypting Drives (SEDs) and at least one server management module (Ironik), the logistic stack used for bare-metal deployment and management, to manage encryption keys and ensure that all new servers are encrypted before being deployed into the data centre.

According to an embodiment, an IP address is assigned as a function of termination for Virtual Extensible LAN (VXLAN) and Border Gateway Protocol (BGP). Preferably, this IP address functions as the intermediary address between two networked devices in a dynamic mode.

According to an embodiment, IP addresses between network devices are pre-calculated and assigned to their respective interfaces within the Configuration Management Database (CMDB) module 210. Once in CMDB module 210, the present technology is configured to allow the retrieving of the interconnections between network devices and thus obtain the necessary information to establish routing protocol BGP connections. Advantageously, to set up a BGP session, it is preferable to know the Autonomous System Number (ASN) of the device on the other end for the BGP peer configuration.

According to an embodiment, pre-calculating IP addresses for network devices and assigning them to their respective interfaces within the CMDB module 210 enables to effectively identify connections between devices and configure BGP sessions, preferably with the required ASN information. Advantageously, this streamlines the process of managing a complex network infrastructure while ensuring accurate and consistent routing configurations.

According to an embodiment, the Intelligent Platform Management Interface (IPMI) is configured for managing servers within a computing infrastructure. Advantageously, this setup enables efficient and centralized control over server operations.

According to an embodiment, the present technology allows for minimal footprint automated infrastructure deployment through the use of compact and efficient hardware components and streamlined software processes. This enables quick and easy implementation in various environments with limited space or resources.

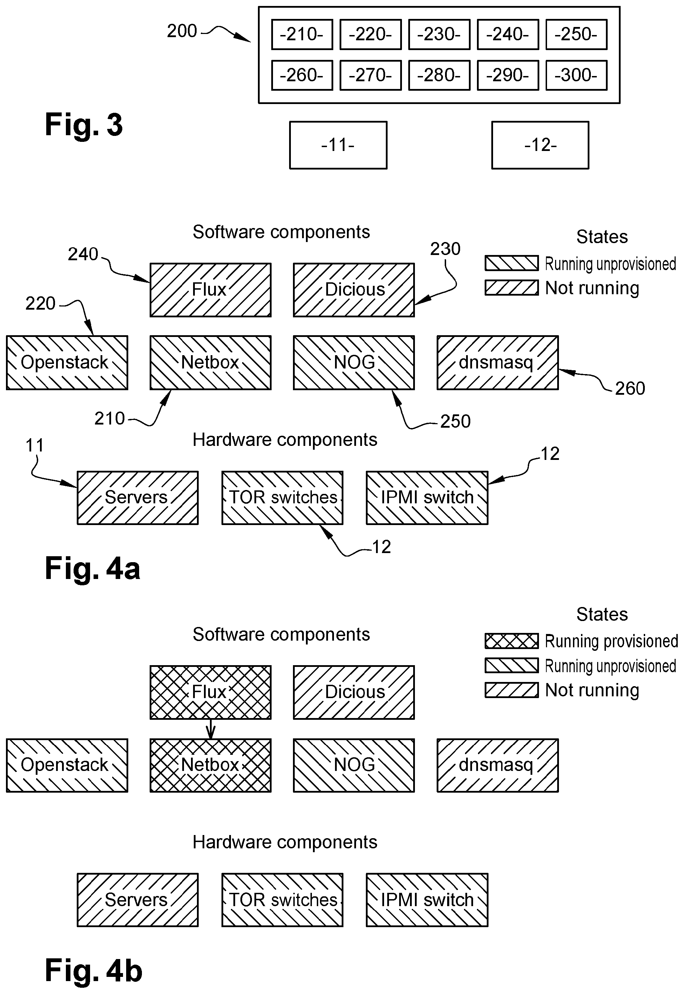

According to an embodiment, Figures 4a to 4f provide an illustrated representation of some steps involved in the computer-implemented method for automated deployment of at least one computing infrastructure according to the present technology.

In figure 4a, the configuration module 240, Flux, is shown sending data to the CMDB module 210, Netbox. This data includes information about the un-provisioned server 11 and switch 12 that are yet to be deployed in the computing infrastructure 10. The communication module 230, Dicious, which manages communication between various software components, facilitates this transfer of data from the configuration module 240 to the CMDB module 210.

In figure 4b, the CMDB module 210 receives the data sent by the configuration module 240 and uses it to configure the Domain Name System (DNS) module 260, DNSMasq. The communication module 240 manages the DHCP interface for the DNS module 260 during this process. This step ensures that the DNS services in the computing infrastructure 10 are properly configured, enabling efficient name resolution and network functionality.

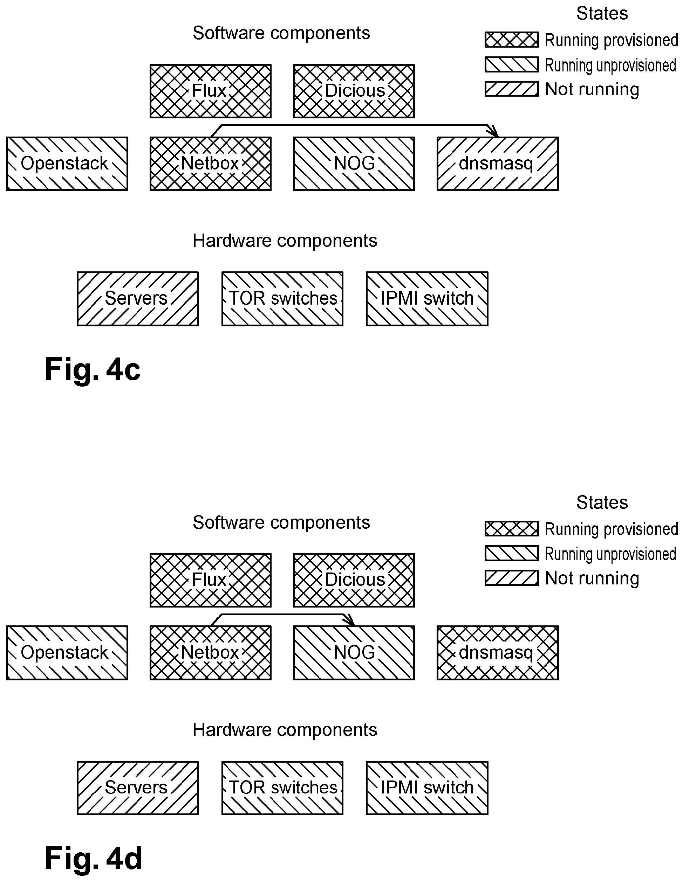

In figure 4c, the CMDB module 210 sends data to the Network Operations Gateway (NOG) module 250. The NOG module 250 is responsible for piloting the switch 12 by receiving configurations from the CMDB module 210 and applying them to the switch 12. This process automates the configuration of switches 12 in the network infrastructure 10, ensuring consistent and accurate configurations across all switches 12.

In figure 4d, the deployment module 220, OpenStack, receives instructions from the CMDB module 210 regarding the inventory data of the un-provisioned server 11 and switch 12. The deployment module 220 provisions the network stack with this information, pushing the configurations onto the switches 12 after boot. This step automates the deployment process, reducing the time and effort required for manual configuration and provisioning.

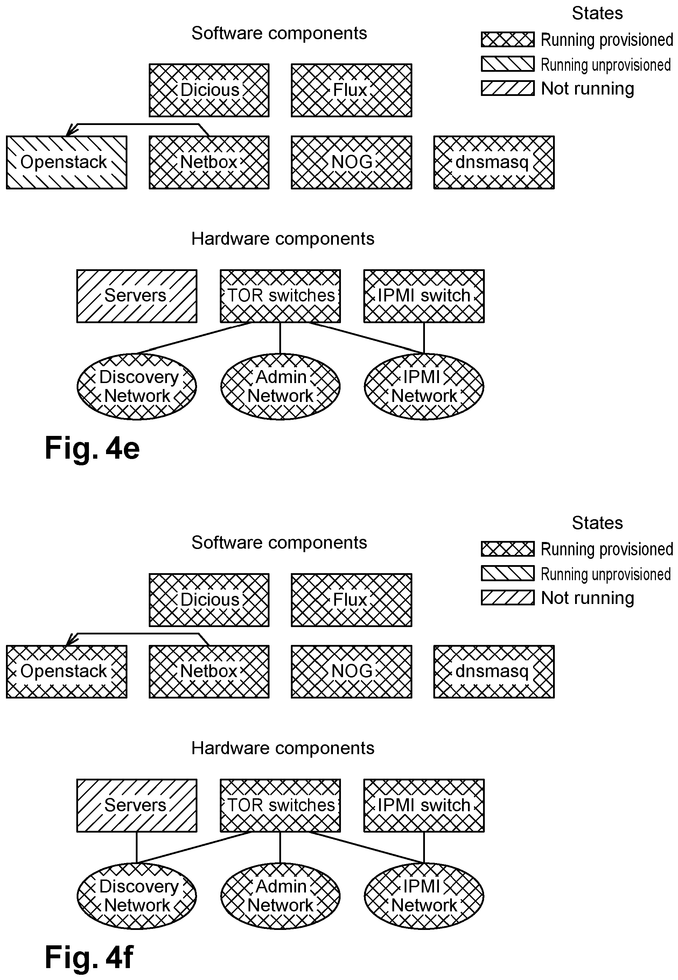

In figure 4e, the servers 11 and switches 12 are shown being provisioned using the data from the CMDB module 210. The deployment module 220 initializes the un-provisioned server 11 by installing an operating system image and other necessary configurations. The network stack is also configured, including virtual interfaces, IP addresses, and routing tables.

In figure 4f, the servers 11 are discovered by the deployment module 220 using a server management module 270, Ironic. This discovery process involves initializing the server 11 with an operating system image and other configurations, registering it with the CMDB module 210, and enriching its inventory data. The communication module 230 manages this process by managing DHCP interfaces and allowing communication between the CMDB module 210 and the deployment module 220. Once the server 11 is discovered, it becomes manageable by users within the computing infrastructure 10.

According to an embodiment, the deployment module is configured to perform certain functions. Preferably, this deployment module 220 is capable of detecting at least one new server, i.e. un-provisioned server 11, using the communication module 230.

Advantageously, upon detection of a new server 11, the deployment module 220 sends the port number and switch 12 number of the new server 11 to the Configuration Management DataBase (CMDB) module 210 via the communication module 230.

Furthermore, according to an embodiment, once the new server 11 has been successfully added to the CMDB module 210, the deployment module 220 removes the discovery mode of the new server 11 using the communication module 230.

According to an embodiment, the present technology is configured to use switches 12 from distinct manufacturers, such as Arista or Cisco, for example. Preferably, the network infrastructure 10 employs a diverse range of components for enhanced reliability and interoperability. Advantageously, incorporating switches 12 from different manufactures allows for flexibility in design and potential cost savings.

The use of switches 12 from distinct manufacturers may provide several technical advantages:
- Interoperability: Switches 12 from various manufacturers may have unique features or capabilities that can enhance the overall network performance when used together.
- Redundancy: Having switches 12 from multiple sources ensures a more robust and resilient infrastructure, as components from different vendors are less likely to fail simultaneously.
- Cost savings: By utilizing switches 12 from various manufacturers, organizations may be able to negotiate better pricing or find cost-effective alternatives for specific network requirements.

According to an embodiment, the deployment module 220 comprises the network virtualization and orchestration component 290, Neutron. This component enables creation and management of virtual networks, subnets, routers, firewalls, load balancers, and other networking components within the deployment module 220.

According to an embodiment, the present technology comprises a step of managing server deletion in the computing infrastructure 10. Preferably, the step of managing server deletion comprises the following sub-steps
- Deleting a server 11 from the deployment module 220;
- Deleting the corresponding entry of the server in the Configuration Management Database (CMDB) module 210;
- Setting back the discovery process in the CMDB module 210.

According to an embodiment, deleting a server from the deployment module 220 results in the automatic deletion of the corresponding entry in the CMDB module 210. Advantageously, this feature ensures that the configuration management database remains up-to-date with the current state of the computing infrastructure 10. According to another embodiment, the method may include additional steps such as verifying the identity of the user requesting the server deletion or confirming that all dependent resources are removed before initiating the deletion process. Advantageously, these features enhance the security and reliability of the computing infrastructure by ensuring proper handling of dependencies and preventing unintended consequences during server deletions.

According to an embodiment, the present technology comprises a step for securing computing infrastructure 10 components. Preferably, the method comprises ensuring secure boot and/or disk encryption. Advantageously, the present technology can comprise a step of deploying software images. According to an embodiment, secure boot is implemented during the deployment process to ensure that only authorised software is loaded onto the servers. This prevents unauthorised code from running and helps protect against malware attacks. According to an embodiment, disk encryption can also be applied to safeguard data stored on servers 11.

According to an embodiment, the present technology comprises discovering at least one bare-metal server, i.e. un-provisioned server 11, using the server management module 270, such as Ironic. This step allows identifying servers 11 that do not have an operating system installed and are directly accessible at the hardware level. Advantageously, the discovered bare-metal server 11 is presented to the deployment module 220 as a compute resource. The presentation occurs through the server management module 270. This integration enables automated deployment of software on the bare-metal server 11. Preferably, self-encrypting drives (SEDs) are integrated into the server management module 270. These drives provide hardware-level encryption for data stored on them. The present technology is configured to assign unique encryption keys to each host and/or disk and/or client of the computing infrastructure resources. Advantageously, a key management module 280, such as Barbican, manages the assigned unique encryption keys. This ensures secure storage and access to the encryption keys. The encryption is transparent to the operating system, allowing for seamless integration within the computing infrastructure 10.

According to an embodiment, the server management module 270 comprises a control plane component. This component is configured to discover and present servers 11 to the deployment module 220 as compute resources. Preferably, it is further configured to integrate encryption.

Additionally, according to an embodiment, the server management module 270 comprises a management module (IPA), which is embedded in an operating system. This management module IPA communicates with the control plane component to perform encryption and decryption tasks, manage disks, and establish communication with the control plane.

According to an embodiment, the present technology comprises a step of securely booting operating systems in the computing infrastructure 10. The present technology can comprises the following sub-steps:
- Generating unique signatures for operating system images;
- Storing the unique signatures in a key management module 280, such as Barbican;
- Validating that only signed operating system images are loaded during the booting of at least one server 11;
- Executing an integrated mechanism into the server management module 270, like Ironic, to perform the validation.

Advantageously, the operating system images are signed by a trusted platform or a trusted provider before being stored and validated. This ensures the authenticity and integrity of the operating system images during the booting process.

According to an embodiment, the key management module 280 is configured to securely store the unique signatures using cryptographic techniques to maintain their confidentiality and prevent unauthorised access. Preferably, the validation step can comprise comparing the stored signatures with the ones generated by the operating system images during the booting process. If a match is found, the server 11 deploys the operating system image; otherwise, it halts the boot process to prevent potential security threats.

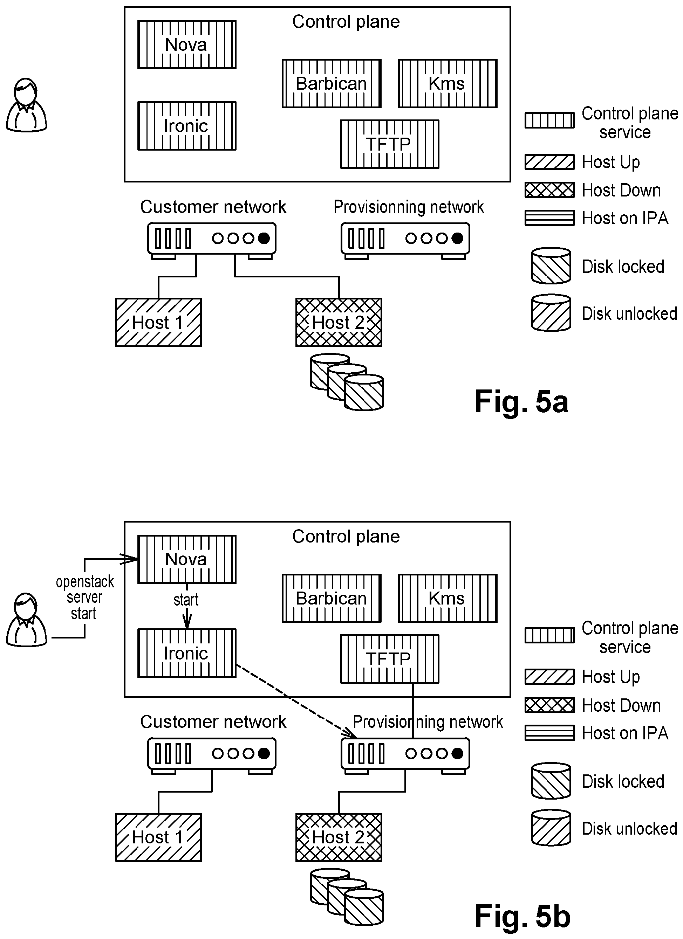

According to an embodiment, the figures 5a to 5k illustrate the steps involved in transitioning from an unprovisioned server 11 to a provisioned one and the recycling process for decommissioning servers 11 using the server management module 270 in the context of deploying and managing at least one computing infrastructure 10. The figures demonstrate various stages, including connecting the server 11 to the provisioning network, booting on IPMI, unlocking disks, switching back to user mode, deleting the server 11, and encrypting SEDs during the recycling process.

In Figure 5a, the initial state of a computing infrastructure is depicted with several software components, such as NOVA, IRONIC, Barbican, KMS, and TFTP. A customer network is connected to two hosts, some disks are locked, and a provisioning network is present. Preferably, NOVA is related to an orchestrator module configured to orchestrate compute resources. Preferably, KMS is a key management system that can be connected or included into the key management module 280, called Barbican. Preferably, TFTP is a file transfer module configured to manage the transfer of files.

In Figure 5b, Nova sends a request to Ironic to start the baremetal node by connecting it to the provisioning network. Ironic reconfigures the host interface to switch it to the provisioning network.

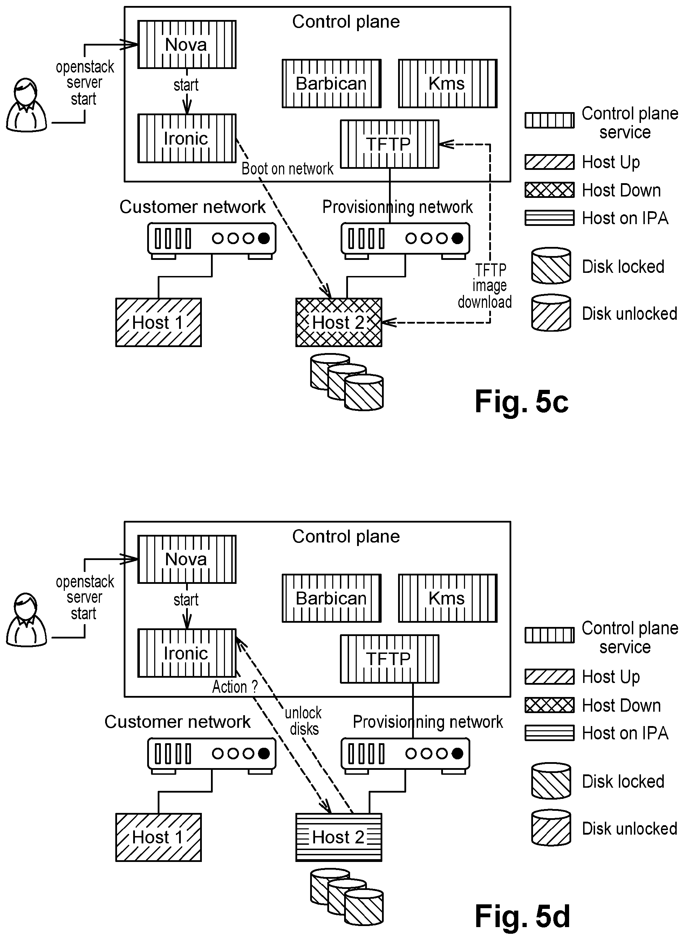

Figure 5c illustrates the boot process of the server on IP Address Management Interface (IPMI) over the network using PXE boot or iPXE. The host downloads the image from the TFTP server during this boot process.

In figure 5d, the Ironic Python Agent image is executed on the host. It asks the control plane for instructions and receives a command to load the "Unlock Disk" feature.

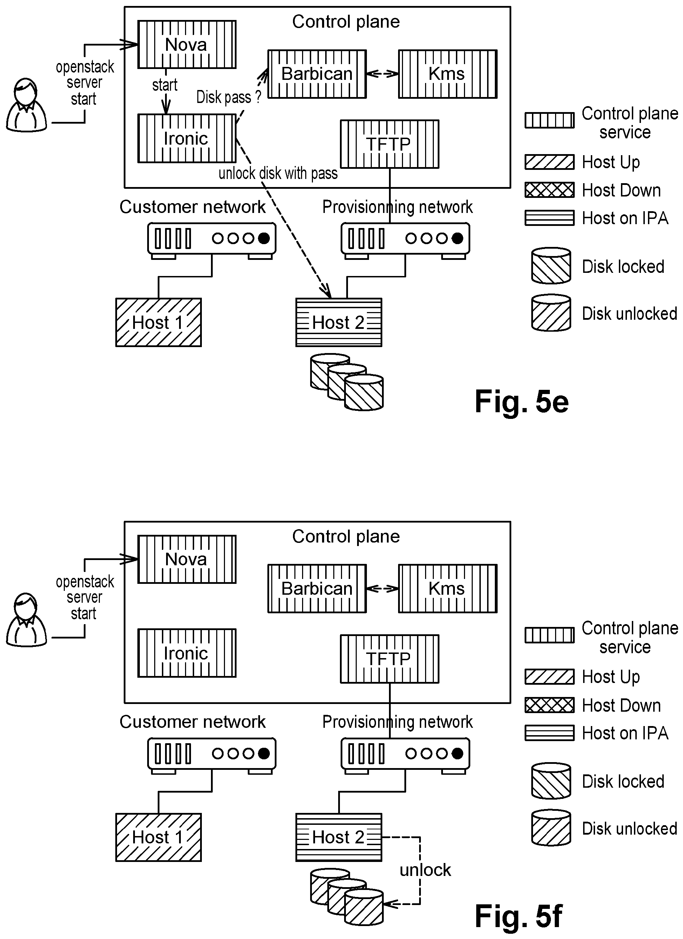

Figure 5e shows IPA using the instructions from Ironic to unlock all disks using a given key obtained from Barbican and stored in KMS.

In figure 5f, IPA is configured to unlock all disks with the provided key, preferably using OPAL-API.

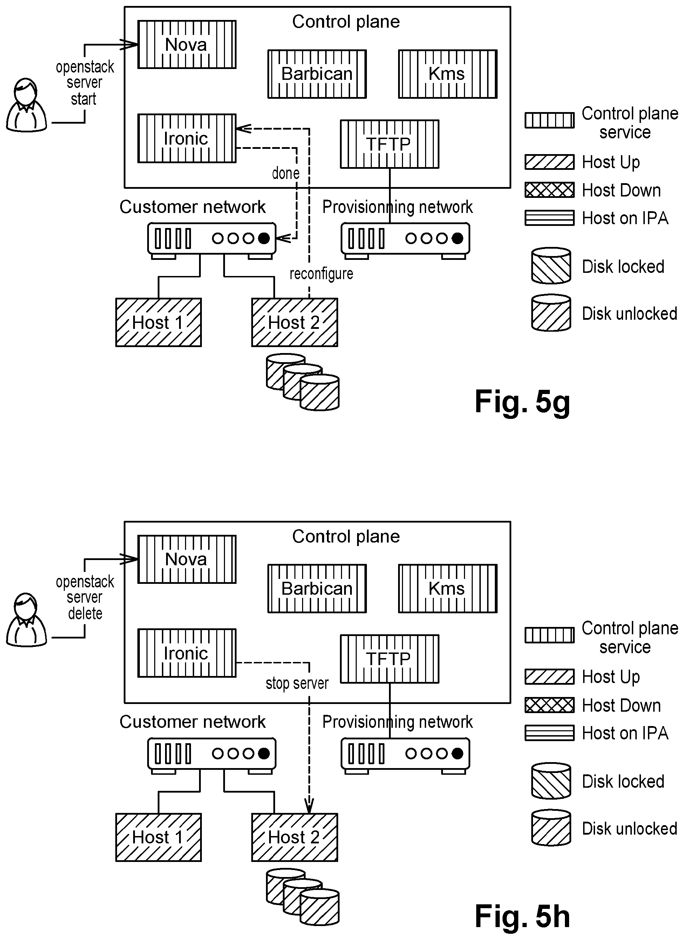

Figure 5g represents the "switch back to user" step where IPA informs Ironic that the job has been completed successfully, and a soft reboot is initiated. Ironic removes the network configuration and puts the host back on the customer network.

Figures 5h through 5k demonstrate the recycling server process. In figure 5h, a customer sends a delete command to Nova, which then sends the delete request to Ironic. Ironic sends a stop command to the server.

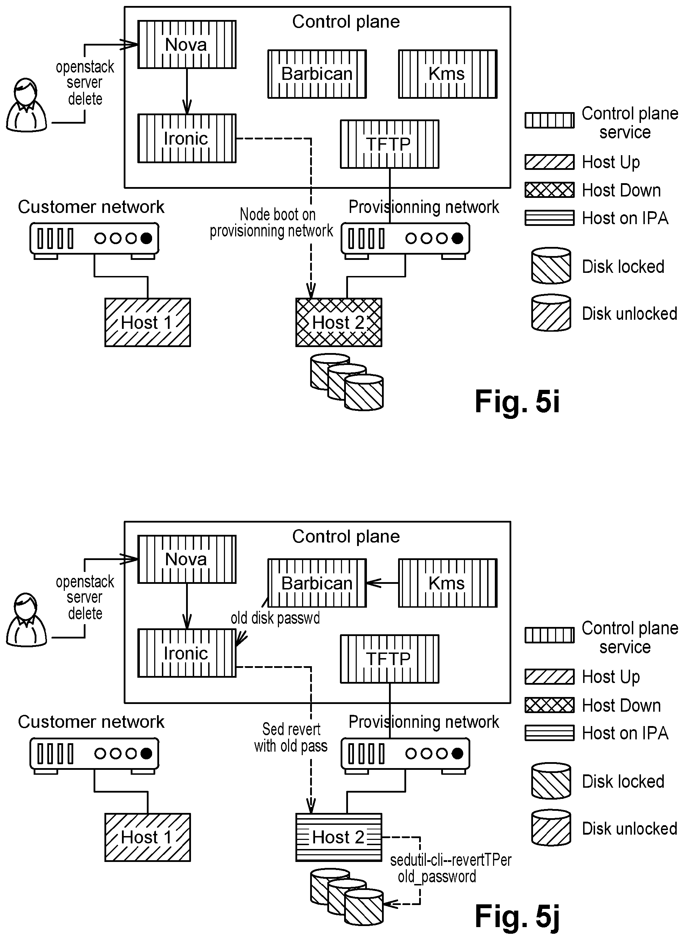

In figure 5i, the boot process is initiated again on IPMI for the recycling process. When the server is off, Ironic reconfigures the network to put it on the provisioning network.

Figure 5j represents the "SEDs revert to factory" step where SEDs are reset to their factory settings.

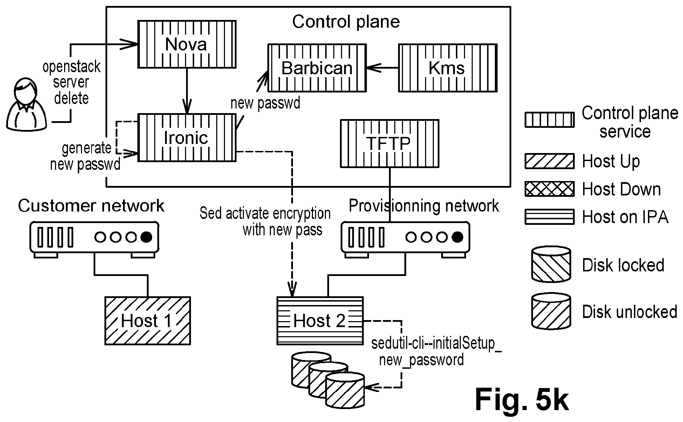

In figure 5k, the "SEDs re-encrypt" step is shown, where SEDs are encrypted using a new encryption key.

In the context of Figures 5a to 5k, the initial state (Figure 5a) sets up the environment with various modules and networks. The "connect server to provisioning network" step (Figures 5b and 5c) initiates the process by requesting Ironic to start the bare-metal node and reconfiguring the host interface to switch it to the provisioning network. The host then boots over the network and downloads the image from the TFTP server.

The "execute Ironic Python Agent image" step (Figures 5d to 5f) instructs IPA on how to unlock all disks using a given key, which is retrieved from Barbican and passed to IPA. IPA then uses "sedutil-cli" to unlock the disks. The "switch back to user" step (Figure 5g) informs Ironic that the job has been completed successfully and initiates a soft reboot, removing the network configuration and putting the host back on the customer network.

The "recycling server" process (Figures 5h to 5k) involves deleting the OpenStack server, booting it on IPA, reverting the SEDs to their factory settings, encrypting them with the latest encryption keys, and continuing with the cleaning process. This process ensures efficient management of resources in a large-scale data center environment while maintaining security and flexibility.

According to an embodiment, the present technology can comprise an integrated mechanism for managing signatures and versioning. Preferably, the integrated mechanism is designed as a software component. This mechanism enables the tracking and management of various versions of data or information, ensuring that only authorised and authenticated changes are implemented. Advantageously, this feature enhances data security and integrity by providing a reliable means to maintain a record of all modifications made to the system or apparatus over time. Additionally, it allows for efficient version control, enabling users to easily revert to previous versions if necessary.

According to an embodiment, the present technology comprises a step of logging data. Preferably, this logging step records events for subsequent analysis. According to another embodiment, the present technology comprises a monitoring step. In this step, real-time or periodic observation of a system or process is carried out. Advantageously, the present technology may incorporate an auditing step. This step involves reviewing logs and other data to ensure compliance with policies or regulations. Security is another feature that can be incorporated into the present technology, as previously described. Preferably, this security aspect includes measures for protecting data from unauthorised access or manipulation.

According to an embodiment, the present technology comprises a step of reporting a state of a server in the computing infrastructure, the step comprising at least the following sub-steps:
- discovering the server using a server management module,
- retrieving configuration data from a Configuration Management Database (CMDB) module, and
- generating a report comprising the discovered information and the retrieved configuration data, preferably the report is then transmitted to an administrator or a monitoring system for further analysis and action.

According to an embodiment, the computing infrastructure 10 can comprise a private network for server discovery. Preferably, the private network is implemented as a local area network (LAN) and/or a wide area network (WAN) that is owned and operated by a user or an organization. Advantageously, using a private network for server discovery provides increased security and control over the discovery process compared to using public networks. The private network can be configured with access controls and firewalls to restrict unauthorized access and prevent potential attacks. Additionally, the use of a private network allows for faster and more reliable communication between servers on the network. Advantageously, the use of a private network for server discovery can be particularly beneficial in environments where security and reliability are critical, such as in financial services, healthcare, or government applications. By controlling the discovery process within a private network, organizations can reduce the risk of unauthorized access or data breaches that can occur when using public networks for discovery. Additionally, according to an embodiment, the present technology can comprise implementing load balancing and failover mechanisms to ensure high availability and fault tolerance of the server infrastructure. Preferably, these mechanisms are integrated with the private network and can automatically detect and redirect traffic to available servers in case of failures or overload conditions.

According to an embodiment, the present technology comprises a step of managing Internet Protocol (IP) addresses in a computing infrastructure. This step can comprise the following sub-steps:
- Pre-calculating all required IP addresses based on a set of rules, such as template, subnet mask and number of hosts per subnet;
- Storing the calculated IP addresses;
- Transmitting the stored IP addresses to the appropriate components in the network through the communication module;

Preferably, each IP address is related to a template associated with a specific function within the computing infrastructure. Advantageously, this step of managing IP addresses can be dynamically updated as needed.

In more detail, according to an embodiment, this step begins by determining the necessary IP addresses based on predefined rules such as subnet mask and number of hosts per subnet. These calculations are performed offline and the resulting IP addresses are stored for later use. When required, the calculated IP addresses are transmitted to the appropriate components in the network through the communication module 230. Advantageously, each IP address is associated with a specific template that defines its function within the computing infrastructure 10. For example, an IP address used for a web server may be associated with a template that includes port numbers and other relevant configuration information. This allows for easy management and configuration of network components. Furthermore, IP addresses can be dynamically updated to accommodate changes in the network environment. For instance, if a new component is added to the network, its IP address can be calculated and transmitted to the appropriate module and/or device using the present technology. Similarly, if an existing IP address needs to be changed, the calculation can be rerun and the updated IP address can be transmitted accordingly.

It has to be noticed that IP addresses must be provisioned, or reserved, when setting up the configuration of a new server 11. Failure to do so may result in connectivity issues between devices. Traditional methods of using IP auto-addressing services like DHCP are suitable for simple interfaces such as management networks but not for interconnecting network devices.

The presented solution aims to simplify the process of configuring network devices in a data center environment by utilizing templates.

For example, the present technology can comprise a first and a second template.

Preferably, the first template, referred to as "device types," can be configured to define the interfaces and their roles for various device types.

Preferably, the second template, named "network prefixes per roles," can be configured to specify IP address ranges available for different roles.

This approach streamlines the configuration process by automating the assignment of interfaces and IP addresses based on a device's role and type.

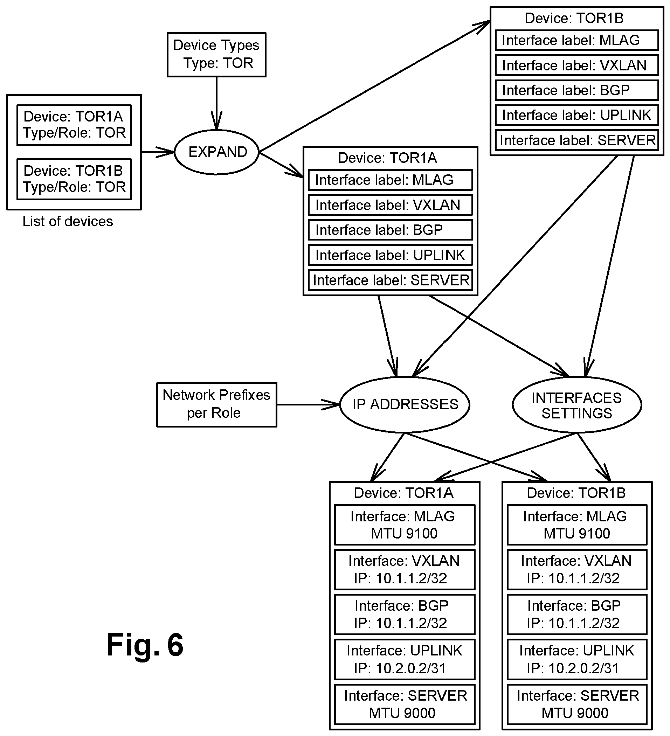

Figure 6 illustrates the workflow switch configuration. This workflow begins with providing a list of devices, such as switches and/or servers, along with their respective roles and types.

According to an embodiment, the first step in the process is to expand the given devices using the "device types" template. This expansion results in devices having their associated interfaces labeled. Subsequently, two parallel processes are initiated. These processes parse the interface lists for each device and determine IP addresses based on the device's role and label. By utilizing templates and parallel processing, the solution efficiently generates a high-level configuration file for network devices.

Preferably, the first step in the workflow involves providing a list of devices, including switches and their respective roles and types. This information is crucial for determining the interfaces and IP addresses required for each device based on its role within the network infrastructure.

Next, the configuration process begins by expanding the given devices using the "device types" template. This expansion results in a more detailed representation of the devices, including their associated interfaces labeled according to their roles. For instance, if we have a switch with the role of a Top-of-Rack (ToR) switch, its interface labels would be defined based on the device types of template for ToR switches.

Following this expansion step, two parallel processes are initiated: one for parsing the list of interfaces per device and another for calculating IP addresses and completing specific attributes based on the role of the device and the label of the interface. These processes run concurrently to optimize efficiency in the configuration process.

The first parallel process, which handles interface parsing, determines the IP addresses and other relevant configurations for each interface based on its label and the role of the device it is associated with. For example, if an interface is labeled as a management interface, it would be configured using the network prefixes per roles template for management interfaces.

The second parallel process, which handles IP address calculation and attribute completion, uses the "network prefixes per roles" template to determine the available IP address ranges for each role. Based on this information, it calculates the specific IP addresses required for each interface based on its label and the role of the device it is associated with. Additionally, it completes any other necessary attributes for the interfaces, such as VLANs or subnet masks.

Once both parallel processes have completed their tasks, a high-level configuration file for the network devices is generated. This file contains all the necessary information to configure the switches and other network devices within the data center infrastructure. The figure 6 illustrates this workflow in a clear and concise manner, highlighting the importance of templates and parallel processing in optimizing the switch configuration process.

As previously mentioned, the advantages of this template-based solution comprise improved efficiency and reduced errors in configuring network devices. The automation of interface assignment and IP address calculation ensures consistency across the data center infrastructure. Additionally, the parallel processing of multiple devices allows for a more scalable approach to managing large numbers of devices. This solution offers organizations an effective way to manage their network configurations while maintaining security, reliability, and flexibility in their data center environment.

According to an embodiment, the present technology can be configured to manage a fleet of distributed computing infrastructure 10, i.e. data centers. Preferably, each computing infrastructure 10 in the fleet can be geographically dispersed and operates independently. Advantageously, the present technology comprises monitoring the performance of each computing infrastructure 10 in real-time and allocating workloads accordingly to optimize resource utilisation and improve overall system efficiency. Furthermore, the present technology may comprise implementing automated failover mechanisms to ensure high availability and disaster recovery capabilities. Additionally, the present technology can comprise integrating security measures to protect data and prevent unauthorized access to the data centers in the fleet. Moreover, the present technology may involve using advanced analytics and machine learning algorithms to predict and prevent potential issues before they occur, thereby reducing downtime and improving system reliability. Advantageously, the present technology can be implemented using a cloud-based platform or a decentralized network architecture for scalability and flexibility.

According to an embodiment, the present technology comprises a step of managing a fleet of distributed computing infrastructures, the step comprising at least the following sub-steps:
- deploying and configuring computing components in each computing infrastructure using automated processes;
- pulling configurations across all computing infrastructures;
- monitoring performance and resource utilization; and
- implementing security measures to protect against unauthorized access or data breaches;
- preferably, providing features such as logging, monitoring, auditing, and key management for distributed key management and auditing.

According to an embodiment, the present technology can be configured to mutualise at least one switch 12 between a plurality of deployment modules 220. Preferably, each deployment module 220 is an OpenStack environment. Advantageously, this arrangement allows for multiple Network Operating Gateways (NOGs) module 250 to utilize the same switch 12.

According to another embodiment, in the absence of mutualising switches 12 between NOGs 250, each NOG would require its own dedicated switch 12. This could lead to increased costs and complexity. Advantageously, one switch 12 can be shared among multiple NOGs 250. This reduces the overall number of required switches 12 and lowers costs. Furthermore, according to an embodiment, each client, i.e. user, is associated with a specific NOG 250. However, due to the mutualised switch 12 arrangement, multiple clients from different NOGs 250 may transmit data through the same switch 12 at different times. This does not cause any interference or conflicts, as the NOG 250 association ensures proper routing and management of the transmitted data.

According to an embodiment, the present technology can comprise a mutualisation step of managing network infrastructure in a computing infrastructure. Preferably, the step can comprise at least enabling multiple deployment modules 220 to share at least one switch 12 by synchronizing their configurations and allowing efficient utilization of resources.

According to an embodiment, the present technology relates to a computer-readable storage medium storing instructions for implementing the present technology, and therefore being configured to deploy and manage through autonomous initialization and configuration processes.

According to an embodiment, the first portion of the instructions on the computer-readable storage medium pertains to the automatic initialisation of network configurations in the computing infrastructure 10. This process can begin by pre-generating YAML files, which contain necessary information for configuring network equipment. These YAML files can be converted into usable configuration files using processes under Netbox and other tools and/or modules.

According to an embodiment, the second part of the instructions deals with the control mechanism that enables request instantiation in the computing infrastructure 10. This mechanism involves comparing real configurations with their logical counterparts using modules like Ironic 270 and Netbox 210, for example. Upon detection of a new server 11, OpenStack 220 initiates actions to configure it automatically, including installing the initial operating system image, registering the server 11 with Netbox 210, and enriching its inventory.

Once the server's configuration is updated in Netbox 210, Dicious 230 generates network configuration files for OpenStack 220 to use, enabling the creation of virtual networks, ports, and other configurations required for the server to function correctly.

According to an embodiment, the third part of the instructions focuses on the parallel execution of configuration tasks using Ironic 270 when a new server 11 is added to the computing infrastructure. Ironic 270 manages power states, deploys operating system images and configurations, and provisions new servers with appropriate network configurations.

According to an embodiment, the fourth part of the instructions deals with synchronizing multiple controllers in the computing infrastructure 10 environment, specifically Netbox 210 and OpenStack 220. This synchronization is essential for maintaining consistency between the physical network configuration and the virtualized network configurations managed by OpenStack 220.

According to an embodiment, the fifth part of the instructions involves the parallel provisioning of configurations for multiple pieces of equipment in the computing infrastructure 10 using Netbox 210 and OpenStack 220. This process ensures that new equipment is quickly integrated into the existing infrastructure without causing unnecessary downtime or configuration conflicts.

According to an embodiment, an optional feature of the present technology relates to encryption for data protection. The objective is to ensure that sensitive information remains confidential even if the physical security of the servers is compromised. This encryption feature can be applied transparently at the disk level using Self-Encrypting Drives (SEDs) without requiring any modification to the operating system or application layer.

According to an embodiment, the present technology relates to a processing sub-system 200 for automated deployment of a computing infrastructure 10. This processing sub-system 200 comprises at least one un-provisioned server 11 and at least one switch 12. The processing sub-system 200 also comprises a processor 300 and a computer-readable medium storing instructions that, upon being executed by the processor 300, cause the execution of various software components.

As previously described, according to an embodiment, the software components comprise at least:
- a Configuration Management DataBase (CMDB) module 210, preferably configured to manage and store inventory data relating to the un-provisioned server 11 and the switch 12. Advantageously, this data can comprise IP addresses of switches 12, interfaces, VLANs, region names, and configuration templates;
- a deployment module 220, preferably configured to deploy the computing infrastructure 10. Advantageously it is configured to receive instructions from the CMDB module 210 regarding the inventory data of the un-provisioned server 11 and the switch 12. Then, the deployment module 220 provisions the network stack with this information, pushing the configurations onto the switches 12 after boot;
- a communication module 230, preferably configured to allow communication between the CMDB module 210 and the deployment module 220 and to manage at least one Dynamic Host Configuration Protocol (DHCP) interface module. Advantageously the communication module 230 initializes the discovery process by configuring interfaces in a Discovery VLAN using a server management module 270. Once the rack is provisioned, each server 11 is discovered at boot by the deployment module 220 and becomes manageable by a user;
- the configuration module 240, preferably configured to initialize the CMDB module 210 with information relating to the switch 12 and its configuration. This data can comprise IP addresses of switches 12, interfaces, VLANs, region names, and configuration templates. From this information, the configuration module 240 is configured to generate rendered configurations for DHCP services on IPMI and management networks, as well as for switches 12, allowing their provisioning;
- a Network Operations Gateway (NOG) module 250, preferably configured to pilot the switch 12 by receiving configurations data from the CMDB module 210 and applying the received configurations to the switch 12. This process ensures that the network infrastructure is properly initialized and configured during the deployment of the computing infrastructure 10;
- a Domain Name System (DNSMasq) module 260. DNSMasq 260 is configured to manage the DNS services in the computing infrastructure 10. It uses standard protocols like DHCP to answer requests from servers 11 and provides them with the necessary configurations.
- Optionally, a server management module 270, preferably configured to manage and control the provisioning, deployment, and lifecycle of un-provisioned servers 11 in the computing infrastructure 10 environment. It interacts with other components such as the deployment module 220 and the network virtualization and orchestration component 290, for example Neutron, to ensure seamless integration of new servers 11 into the existing infrastructure while maintaining security and consistency ;
- Optionally, a key management module 280, preferably configured to manage and securely store encryption keys for various components of the computing infrastructure 10, ensuring that only authorized users have access to these keys. It automates the process of generating, distributing, and rotating encryption keys during server provisioning and deployment;
- Optionally, a network virtualisation and orchestration module 290, called Neutron, preferably configured to manage and create virtual networks, subnets, routers, firewalls, load balancers, and other related networking components within the computing infrastructure 10. It enables the automation of network configuration and management tasks, ensuring efficient and consistent deployment and maintenance of network services in the computing infrastructure 10 environment.

According to an embodiment, the processing sub-system 200 can also comprise at least one NOG master 251 and at least a plurality of NOG slaves 252. The NOG master 251 holds data about a plurality of switches 12, while each NOG slave 252 contains data about only one switch 12 from the plurality of switches 12. Preferably, in this multi-NOGs configuration, the master NOG 251 is capable of configuring all shared elements as it has knowledge of all switches 12. In contrast, each slave NOG 252 only possesses information regarding its respective switch 12 and does not have access to the configurations of other switches 12.

According to an embodiment, to address the challenges associated with managing large network fabrics using a single automation instance of a NOG in data centers, a new solution is required. Indeed, there is a need for multiple NOG instances to improve availability, resiliency, and security while maintaining the ability to share common information for local configuration management.

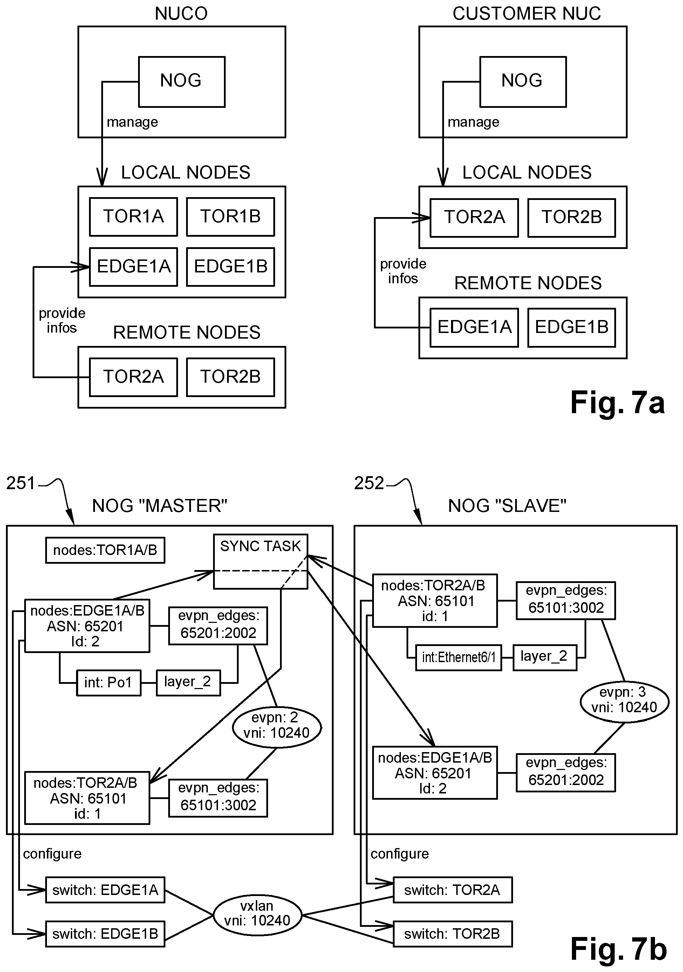

According to an embodiment, and as illustrated by figures 7a and 7b, the present technology offers to extend an existing NOG architecture to support multiple instances. Each MiniPod, i.e. group of racks, can run its local NOG instance with an associated orchestrator, for example, the deployment module 220, also called OpenStack. Preferably, a MiniPod is a group of a predetermined number of racks managed by the same deployment module 220. This setup eliminates the need for a centralized single-point-of-failure instance and allows for better management of different areas of responsibility within the network fabric.

One key advantage of this solution is that there will be no direct interaction between shared devices and local instances, which significantly reduces the attack surface and enhances security. However, it's essential to ensure that these local instances can still manage their local configurations effectively.

According to an embodiment, to achieve this goal, the present technology provides a mechanism for sharing common information between the local NOG instances. This could be accomplished through a centralized database or a distributed data store accessible to all instances. By enabling each instance to access and utilize the shared information, they will be able to manage their local configurations while maintaining consistency with the overall network fabric configuration.

According to an embodiment, the proposed solution for managing computing infrastructure networks comprises splitting the Network Operations Gateway (NOG) into central, i.e. master, and local, i.e. slave, instances, each managed by a separate orchestrator. This design allows for better availability, resiliency, and security as it eliminates the need for a single-point-of-failure instance and enables different areas of responsibility within the network fabric. The central NOG instance, hosted on the main controller (NUC0), manages local TOR (Top-Of-Rack) and EDGE devices, while each customer controller hosts a local NOG instance to manage its dedicated TOR devices.

Figures 7a and 7b are diagrams that illustrate the concept of multiple instances of Network Operations Gateways (NOGs) in a computing infrastructure 10 according to an embodiment of the present technology. These figures demonstrate how a central NOG instance manages local TOR (Top-Of-Rack) devices and EDGE devices, while each customer controller hosts a local NOG instance to manage its dedicated TOR devices.

According to an embodiment, and as illustrated by figure 7a, in this high-level design, the central NOG instance is responsible for managing local TOR and EDGE devices, providing network services connectivity with external networks or devices. The local NOG instances, on the other hand, manage their respective dedicated TOR devices, enabling customers to manage their own local network resources through their local NOG instance. To facilitate sharing information for building shared services, NOG instances can declare a node as "remote," which does not require configuration management.

The benefits of this solution include improved availability and resiliency due to the elimination of a single-point-of-failure instance and the ability to manage different areas of responsibility within the network fabric. Additionally, the design offers enhanced security as each customer has control over its local network resources through its dedicated NOG instance. The capability to share information between instances allows for the building of shared services while minimizing direct interaction between shared devices and local instances.

According to an embodiment, the Local NOG, also called the slave NOG, is responsible for managing the Top-of-Rack (ToR) devices within a rack, while being aware of remote nodes outside its scope but unable to change their configurations. It is addressed by a local orchestrator. On the other hand, the Central NOG manages nodes that are located outside of racks or not managed by a Local NOG instance. The Central NOG creates and deletes services (evpnedges) on these nodes to allow configuration on the local ToR and is aware of ToR devices as remote nodes. It syncs tasks, pushes configurations, and manages these remote nodes when needed.

According to an embodiment, each Local NOG, i.e. the slave NOG, plays a role in managing the network infrastructure within a rack, ensuring that the ToR devices are configured correctly and functioning optimally. By being aware of remote nodes, it can utilize their information for local purposes but does not have the ability to change their configurations. This separation of responsibilities allows for better organization and management of the data center network. The Local NOG is a component allowing to maintain the overall network infrastructure while ensuring that each rack operates efficiently and effectively.

According to another embodiment, the Central NOG, i.e. the master NOG, on the other hand, focuses on managing nodes that are located outside of racks or not managed by a Local NOG instance. It acts as a central hub for managing extended services between local and remote nodes. It enables configuration on the local ToR devices. The Central NOG's ability to sync tasks and manage remote nodes ensures that the entire data center network remains consistent and cohesive. This separation of responsibilities between Local and Central NOG instances allows for efficient management and maintenance of large-scale data center networks.

According to an embodiment, figure 7b illustrates a low-level design for configuring a service between two Network Operations Gateway (NOG) instances, referred to as "master" and "slave." These NOG instances manage different parts of the network infrastructure, with the master instance managing devices within one area and the slave instance handling devices in another area. The service can be identified by a VxLAN identifier, which is used on both NOG instances to ensure proper synchronization. Preferably, the present technology can comprise a synchronization process involves in creating specific objects, EDGE1A/B on the slave instance and TOR2A/B on the master instance, and completing their configuration with evpn_edges objects on each side.

According to an embodiment, the synchronization process configures services between NOG instances. For example, It can begin by creating the EDGE1A/B objects on the slave instance and the TOR2A/B objects on the master instance. These objects represent the network devices that need to be configured as part of the service. Once these objects have been created, evpn_edges objects are added to each side to complete the configuration process. The evpn_edges objects enable the communication between the devices and ensure that the service functions correctly within the data center infrastructure.

The low-level design for configuring services between NOG instances provides several advantages. By using a VxLAN identifier, the synchronization process ensures that both NOG instances have consistent information about the network devices and their configurations. This reduces the likelihood of errors and inconsistencies in the network infrastructure. Additionally, by allowing each NOG instance to perform configuration tasks on their relevant switches, the design enables efficient management of the data center environment while maintaining security and reliability.

According to an embodiment, the multi-NOG configuration in the processing system offers several technical advantages:
- Isolation of networks: By having multiple NOGs, each responsible for managing a specific switch or a group of switches, the network infrastructure is isolated, reducing the risk of unintended changes or misconfigurations that could affect the entire data center.
- Security: The multi-NOG configuration enhances security by limiting access to configurations and control of switches to only those authorized personnel who manage the specific NOG. This reduces the attack surface and minimizes the potential impact of a security breach.
- Scalability: As the data center grows, adding more switches can be easily managed by creating new NOGs without affecting the existing infrastructure or requiring extensive changes to the management system.
- Flexibility: Each NOG slave can be configured independently, allowing for customization and tailored solutions for specific use cases or requirements within the data center.

According to an embodiment, the present technology comprises a multi-controllers sub-system for managing and automating the deployment and configuration of the computing infrastructure 10, the multi-controllers sub-system comprising:
- multiple controllers, each responsible for managing a subset of the infrastructure, and
- a communication module enabling seamless communication between the controllers.

This design enhances scalability, improves fault tolerance, and ensures efficient resource utilization by allowing for parallel processing and load balancing among the controllers.

According to an embodiment, and as previously described, the processing sub-system 200 is configured to automate the deployment and management of computing infrastructure 10, including un-provisioned servers 11 and switches 12, preferably in a data center environment.

Advantageously, this processing system offers several technical advantages:
- Minimal footprint: The automated deployment of computing infrastructure 10 using the processing sub-system 200 reduces the need for manual intervention, resulting in a smaller operational footprint and faster deployment times.
- Automated infrastructure deployment: The processing sub-system 200 automates the process of deploying computing infrastructure 10, including servers 11 and switches 12, reducing errors and inconsistencies that can occur with manual methods.
- Optional security measures against unwanted physical accesses: The processing sub-system 200 can comprise features to ensure secure boot and disk encryption for the computing infrastructure 10 components, providing an additional layer of security against unauthorized access.
- Real-time feedback: The synchronization process between Netbox 210 and OpenStack 220 enables real-time feedback, allowing administrators to monitor and manage the computing infrastructure 10 network more effectively.
- Parallel processing: The parallel provisioning of configurations for multiple pieces of equipment in a computing infrastructure 10 using the CMDB module 210 and the deployment module 220 ensures that new equipment is quickly integrated into the existing infrastructure without causing unnecessary downtime or configuration conflicts.
- Encryption for data protection: The optional encryption feature for data protection ensures that sensitive information remains confidential even if the physical security of the servers 11 is compromised.

According to an embodiment, the present technology concerns the automatic initialisation of network configurations in a data center, i.e. a computing infrastructure 10. This process 100 can, for example, begin by pre-generating YAML files containing the necessary information to configure network equipment. These YAML files are converted into usable configuration files using processes under a Configuration Management DataBase (CMDB) module 210 and other tools.

Preferably, upon receiving the pre-filled response file, the sub-system 200 executes several steps:
- Network configurations are created to establish virtual networks necessary for managing server communications and various network interfaces.
- DNS mask configuration: The DNS mask is configured with required information, acting as an interface between physical assets and the sub-system 200. It uses standard protocols like DHCP to answer requests from servers and provide them with necessary configurations.
- Network equipment discovery: Once the DNS mask is configured, network switches 12 can be discovered, and their configurations are updated accordingly based on the information in the YAML files. The switches 12 will then reboot, apply new configuration, and become available for further management.

According to an embodiment, the present technology revolves also around a control mechanism that enables request instantiation in a data centre 10. This mechanism involves comparing real configurations with their logical counterparts using tools like Ironic 270 and Netbox 210:
- Server discovery: When a new server 11 is detected, a deployment module 220, using for example OpenStack, initiates actions to configure it automatically, including installing initial operating system image, registering the server 11 with Netbox 210, and enriching its inventory.
- Configuration synchronization: Once the server's configuration is updated in Netbox 210, Dicious 230 generates necessary network configuration files for OpenStack 220 to use, enabling creation of appropriate virtual networks, ports, and configurations required for the server 11 to function correctly.
- Server boot: Once all configurations are in place, the server 11 can be booted, and it will begin communicating with OpenStack 220 via Ironic 270. This communication enables discovery, enrollment, and management by OpenStack 220 using standard procedures.

According to an embodiment, the present technology also involves parallel execution of configuration tasks using Ironic 270:
- Power management: Ironic 270 manages power states of servers 11 to ensure they are ready for deployment or maintenance activities, including turning servers 11 on or off as needed.
- Image deployment: Ironic 270 can deploy operating system images and other necessary configurations to newly added servers 11, ensuring consistency and minimizing downtime.
- Provisioning: Ironic 270 can provision new servers 11 with appropriate network configurations, allowing them to integrate seamlessly into the existing data center infrastructure 10. This includes configuring virtual interfaces, IP addresses, and routing tables.

According to an embodiment, the present technology deals with synchronizing multiple controllers in a data centre 10 environment, specifically Netbox 210 and OpenStack 220:
- Configuration update: When a change is made to the network configuration in Netbox 210, it is propagated to all connected OpenStack 220 controllers through well-defined APIs or communication mechanisms.
- Automatic network reconfiguration: Once OpenStack 220 controllers receive updated configuration, they automatically reconfigure virtual networks and other components as needed to maintain consistency with physical network.
- Real-time feedback: This synchronisation process enables real-time feedback between Netbox 210 and OpenStack 220, allowing administrators to monitor and manage the data center 10 network more effectively.

According to another embodiment, the present technology also involves parallel provisioning of configurations for multiple pieces of equipment in a data centre 10 using Netbox 210 and OpenStack 220:
- Configuration import: When new equipment is added to the data centre 10, its configuration information is imported into Netbox 210.
- Automated configuration propagation: Once configuration information is imported into Netbox 210, it is automatically propagated to all connected OpenStack 220 controllers through well-defined APIs or communication mechanisms.
- Parallel processing: OpenStack 220 controllers process the configuration information concurrently, enabling multiple pieces of equipment to be configured and integrated into data center 10 network more efficiently.
- Feedback and validation: This process enables real-time feedback between Netbox 210 and OpenStack 220, allowing administrators to validate configuration changes and ensure all equipment is functioning correctly.

The present technology also includes an optional aspect for encryption for data protection using Self-Encrypting Drives (SEDs) and Ironic 270 for automatic management of encryption keys.

Additionally, the present technology relates to improved provisioning processes, Secure Boot technology, and Data Centre as a Service with distributed auditing and key management. These features offer significant improvements in the area of data security for large-scale data centres by implementing encryption at the disk level using Self-Encrypting Drives, automating provisioning processes with Ironic 270, enhancing boot security through Secure Boot technology, and enabling clients to have full control over their infrastructure while maintaining data security with distributed key management and auditing features.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present technology may become apparent to those skilled in the art. The foregoing description is intended to be exemplary rather than limiting. The scope of the present technology is, therefore, intended to be limited solely by the scope of the appended claims.

### References

- 10: A computing infrastructure
- 11: A server
- 12: A switch
- 13: A template
- 100: A computer-implemented method for automated deployment of at least one computing infrastructure
- 110: Accessing a computer-readable medium
- 120: Calculating data
- 130: Initialising software components
- 140: Determining configurations
- 150: Provisioning at least one network stack
- 160: Declaring at least one network
- 170: Synchronising the deployment module with the CMDB module
- 180: Booting at least one un-provisioned server
- 200: A processing system for automated deployment of at least one computing infrastructure
- 210: A Configuration Management DataBase (CMDB) module
- 220: A deployment module
- 230: A communication module
- 240: A configuration module
- 250: A Network Operations Gateway (NOG) module
- 251: A NOG master
- 252: A NOG Slave
- 260: A Domain Name System module
- 270: A server management module
- 280: A key management module
- 290: A network virtualisation and orchestration component
- 300: A processor
- 400: A computer-implemented method for managing at least one fleet of computing infrastructures
- 410: Accessing a computer-readable medium
- 420: Defining infrastructure resources using templates for automated deployment and configuration of computing components
- 430: Storing and managing configuration data in a centralized repository
- 440: Deploying and configuring computing components
- 450: Pulling configuration updates
- 460: Monitoring performance and resource utilization
- 470: Implementing security measures for access control and encryption keys
- 500: A processing system for managing at least one fleet of computing infrastructures
- 510: A version control system module
- 520: A hierarchical configuration module
- 530: An infrastructure orchestration module
- 540: A metric storing module
- 550: A metric aggregator module
- 560: An applications packaging module
- 570: An assembling module
- 600: A primary Data Center
- 610: A secondary Data Center
- 620: A tertiary Data Center

## Claims

1. A computer-implemented method (400) for managing a fleet of computing infrastructures (10), each computing infrastructure comprising an infrastructure orchestration module (530), the method (400) comprising:
• accessing (410) a computer-readable medium comprising instructions which, upon being executed by a processor (300), causes the processor (300) to execute software components comprising:
∘ A version control system module (510) configured to:
▪ Store and manage a configuration file for each computing infrastructure (10) within a configuration repository;
▪ Provide a history of all changes made to the configuration files;
∘ A hierarchical configuration module (520) configured to:
▪ Write, store and manage configuration data in a hierarchical manner;
∘ The infrastructure orchestration module (530) of each of the computing infrastructures configured to:
▪ Deploy and manage containerized applications using declarative configuration files that define a predetermined state of each application and its dependencies;
∘ A configuration module (240) configured to:
▪ Monitor the configuration repository for changes and detect when new configurations are pushed;
▪ Pull the updated configurations from the repository;
▪ Apply the updates to the target computer infrastructure using an orchestrated deployment strategy according to a predetermined set of rules;
∘ An assembling module (570) configured to:
▪ Define dependencies between different components and libraries;
• Defining (420) computing infrastructure resources using a template (13) for automated deployment and configuration of a component, the defining step comprising:
∘ Creating the template (13) of declarative configuration files, by the hierarchical configuration module (520), the template (13) comprising:
▪ A tree structure;
▪ A plurality of fields, each field being multi-type and configured to comprise multiple sub-fields;
▪ Variables configured to be hierarchized, each variable having a name and being a branch of the tree structure and referencing other variables;
o Defining, by the configuration module (240), the configuration of the computing infrastructures (10), comprising interactions between the component and other components using the template;
• Storing and managing (430) configuration data in the repository using the version control system module (510) and the hierarchical configuration module (520), the storing and managing configuration data step comprising:
o Writing configurations by completing at least partially the template (13), according to a predetermined hierarchical order;
o Within the template (13), writing different variables while respecting an order of priority;
• Deploying and configuring (440) the component using the assembling module (570), the deploying and configuring the component step comprising:
o Assigning the hierarchized variables to each of the computer infrastructures, the variables comprising a tag;
o Declaring each computing infrastructure by its tags;
o Retrieving the template (13);
o Generating a declarative configuration file for each computing infrastructure, using the hierarchical configuration module (520), by filling the retrieved template (13) for each computing infrastructure:
▪ Resolving all variables of the template (13) given the tag of the computing infrastructure and given the names of the variables;
▪ Creating an artifact comprising the declarative configuration file of the computing infrastructure;
▪ Placing the artifact in the repository, using the version control system module (510); and
• For each computing infrastructure, pulling (450), using its configuration module (240), the artifact from the repository such that:
o At predetermined intervals, the configuration module (240) reads the artifacts and propagates changes to a computing infrastructure (10).

2. The method according to claim 1, wherein the order of priority is from the trunk of the tree structure to the leaf of the tree structure.

3. The method according to claim 1, wherein each computing infrastructure (10) has its own configuration module (240), and wherein each configuration module (240) is configured for a directory in the repository given in a specific branch of the repository.

4. The method (400) according to claim 1, wherein the software components further comprises a metric storing module (540) configured to:
• Collect metrics from monitored computing infrastructure components;
• Store metrics in a time series database for later querying and analysis, with a predetermined retention period;
• Provide a web interface for visualizing and exploring metrics data;
• Enable automated discovery of new computing infrastructure components by periodically scanning the network for new services and endpoints;
• Support alerting based on predefined rules; and
• Enable automated backups and restores of the metrics data.

5. The method (400) according to any one of claims 1 to 4, wherein the software components further comprises a metric aggregator module (550) configured to:
• Collect and aggregate metrics from multiple metric storing module (540) instances running in each computing infrastructure;
• Store metrics using a combination of local storage and remote object storage; and
• Enable automated data retention policies based on predefined rules.

6. The method (400) according to claim 5, when claim 5 refers back to claim 4, further comprising a step of monitoring performance and resource utilization using the metric storing module (540) and the metric aggregator module (550), the step comprising:
• Exposing metrics on actions, status, and duration of actions, by the configuration module (240) of each computing infrastructure (10);
• Storing, the metric storing module (540), these metrics locally for a first period;
• Consolidating the metrics at a primary computing infrastructure DC1 to provide an overall view of the status of all computing infrastructures managed by the central computing infrastructure DC1; and
• Storing, the metric aggregator module (550), these consolidated metrics for a second period, the second period being higher than the first period.

7. The method (400) according to any one of claims 1 to 6, further comprising a step of implementing security measures for access control using the version control system module (510).

8. The method (400) according to any one of claims 1 to 7, wherein a plurality of declarative configuration files is configured to describe an application, each declarative configuration file of this plurality of declarative configuration files comprising common values.

9. The method (400) according to any one of claims 6 to 8, when claims 7 and 8 refer back to claim 6, wherein the fleet of computing infrastructures (10) comprises multiple levels of computing infrastructures (10), in which the primary computing infrastructure DC1 is configured to manage a group of secondary computing infrastructures (10), each secondary computing infrastructure being configured to manage one or more tertiary computing infrastructures (10).

10. The method (400) according to claim 9, wherein the primary computing infrastructure DC1 is configured to manage the configuration and orchestration of all computing infrastructures (10) in the fleet of computing infrastructures (10), including the secondary and tertiary computing infrastructures, and to replicate data to them.

11. The method (400) according to claim 9, wherein the primary computing infrastructure DC1 is configured to manage the configuration and orchestration of all secondary computing infrastructures (10) in the fleet of computing infrastructures (10), and wherein each secondary computing infrastructure (10) is configured to manage the configuration and orchestration of all its associated tertiary computing infrastructures (10) in the fleet of computing infrastructures (10),

12. The method (400) according to any one of claims 1 to 11, further comprising, after the pulling step (450), a computer-implemented phase (100) for automated deployment of a computing infrastructure (10), the computing infrastructure (10) comprising a un-provisioned server (11) and a switch (12), the automated deployment phase (100) comprising:
• accessing (110) a computer-readable medium comprising instructions which, upon being operated by the processor (300), causes the execution of software components comprising:
∘ a Configuration Management DataBase, CMDB, module (210) configured to manage and store inventory data relating to the un-provisioned server (11) and to the switch (12);
o a deployment module (220) configured to deploy the computing infrastructure (10);
o a communication module (230) configured to:
▪ allow communication between the Configuration Management DataBase module (210) and the deployment module (220); and
▪ manage at least one Dynamic Host Configuration Protocol, DHCP, interface module;
o the configuration module (240) configured to initialize the Configuration Management DataBase module (210) with information relating to the switch (12) and its configuration;
o a Network Operations Gateway, NOG, module (250) configured to manage and control the switch (12) by receiving configurations data from the CMDB module (210) and by applying the received configurations to the switch (12);
o a Domain Name System, DNS, module (260) configured to manage the Domain Name System services in the computing infrastructure (10);
• calculating (120), using the hierarchical configuration module (520) and the assembling module (570), an artifact comprising data for initializing the Configuration Management DataBase module (210), the calculated data comprising at least one Internet Protocol (IP) address of the switch (12);
• initializing (130), by the configuration module (240), at least a part of the software components, by:
o initializing the Configuration Management DataBase module (210) using the calculated data; and
o configuring the Domain Name System module (260) with configurations from the CMDB module (210);
• determining (140), using the Configuration Management DataBase module (210), configurations for:
o the communication module (230) on at least one Intelligent Platform Management Interface, IPMI, and on at least one management network; and
o the switch (12) being configured to be provisioned based on the calculated data from the Configuration Management DataBase module (210);
• provisioning (150) at least one network stack with provisioning data from the Configuration Management DataBase module (210), the provisioning data comprising data relating to network devices, interfaces, networks and the configurations determined by the CMDB module (210), the provisioning (150) comprising:
o provisioning the DNS module (260);
o provisioning the Network Operations Gateway module (250);
• declaring (160) at least one network in the deployment module (220);
• synchronizing (170) the deployment module (220) with the Configuration Management DataBase module (210) to start a server discovery process by the deployment module (220) using the communication module (230); and
• booting (180), via the IPMI, the un-provisioned server (11) to be discovered by the deployment module (220).

13. A computer-readable storage medium storing instructions that, upon being executed by a processing system, cause the processing system to perform the method of any one of claims 1 to 12.

14. A processing system (500) for managing at least one fleet of computing infrastructures (10), each computing infrastructure (10) comprising an infrastructure orchestration module (530), comprising at least:
• a processor (300);
• a computer-readable medium comprising instructions which, upon being operated by the processor (300), causes the execution of software components comprising:
o A version control system module (510), the version control system module being configured to:
▪ Store and manage at least one configuration file for each computing infrastructure (10) within a configuration repository;
▪ Provide a history of all changes made to the configuration files;
o A hierarchical configuration module (520), the hierarchical configuration module being configured to:
▪ Write, store and manage configuration data in a hierarchical manner;
▪ Create templates of declarative configuration files, each template comprising:
• A tree structure;
• A plurality of fields, each field being multi-type and configured to comprise multiple sub-fields;
• Variables, preferably in the form of blocks configured to be factorized, each variable being a branch of the tree structure and referencing other variables ;
▪ Write configurations by completing at least partially considered templates, according to a predetermined hierarchical order;
▪ Within each considered template, write different variables while respecting an order of priority, from the trunk of the tree structure to the leaf of the tree structure;
• The infrastructure orchestration module (530) of each of the computing infrastructures configured to:
o Deploy and manage containerized applications using declarative configuration files (manifests) that define a predetermined state of each application and its dependencies;
• A configuration module (240), the configuration module being configured to:
o Monitor the configuration repository for changes and detect when new configurations are pushed;
o Pull the updated configurations from the repository;
o Apply the updates to the target computer infrastructure using an orchestrated deployment strategy according a predetermined set of rules; and
• An assembling module (570), the assembling module being configured to:
∘ Define dependencies between different components and libraries;
• Defining (420) computing infrastructure resources using a template (13) for automated deployment and configuration of a component, the defining step comprising:
o Creating the template (13) of declarative configuration files, by the hierarchical configuration module (520), the template (13) comprising:
▪ A tree structure;
▪ A plurality of fields, each field being multi-type and configured to comprise multiple sub-fields;
▪ Variables configured to be hierarchized, each variable having a name and being a branch of the tree structure and referencing other variables;
o Defining, by the configuration module (240), the configuration of the computing infrastructures (10), comprising interactions between the component and other components using the template;
• Storing and managing (430) configuration data in the repository using the version control system module (510) and the hierarchical configuration module (520), the storing and managing configuration data step comprising:
o Writing configurations by completing at least partially the template (13), according to a predetermined hierarchical order;
o Within the template (13), writing different variables while respecting an order of priority;
• Deploying and configuring (440) the component using the assembling module (570), the deploying and configuring the component step comprising:
o Assigning the hierarchized variables to each of the computer infrastructures, the variables comprising a tag;
o Declaring each computing infrastructure by its tags;
o Retrieving the template (13);
o Generating a declarative configuration file for each computing infrastructure, using the hierarchical configuration module (520), by filling the retrieved template (13) for each computing infrastructure:
▪ Resolving all variables of the template (13) given the tag of the computing infrastructure and given the names of the variables;
▪ Creating an artifact comprising the declarative configuration file of the computing infrastructure;
▪ Placing the artifact in the repository, using the version control system module (510); and
• For each computing infrastructure, pulling (450), using its configuration module (240), the artifact from the repository such that:
o At predetermined intervals, the configuration module (240) reads the artifacts and propagates changes to a computing infrastructure (10).

15. The processing system (240) according to claim 14, further comprising a processing sub-system (200) for automated deployment of at least one computing infrastructure (10) comprising at least:
• one un-provisioned server (11), and
• at least one switch (12);
wherein the software components further comprises:
o a Configuration Management DataBase, DMDB, module (210) configured to manage and store inventory data relating to the un-provisioned server and to the switch;
o a deployment module (220) configured to deploy the computing infrastructure;
o a communication module (230) configured to:
▪ allow communication between the Configuration Management DataBase module (210) and the deployment module (220); and
▪ manage at least one Dynamic Host Configuration Protocol, DHCP, interface module;
o the configuration module (240) configured to initialize the Configuration Management DataBase module (210) with information relating to the switch and its configuration;
o a Network Operations Gateway, NOG, module (250) configured to manage and control the switch by receiving configurations data from the Configuration Management DataBase module (210) and by applying the received configurations to the switch; and
∘ a Domain Name System, DNS, module (260) configured to manage the Domain Name System services in the computing infrastructure.

## Patentansprüche

1. Computerimplementiertes Verfahren (400) zur Verwaltung einer Flotte von Datenverarbeitungsinfrastrukturen (10), wobei jede Datenverarbeitungsinfrastruktur ein Infrastruktur-Orchestrierungsmodul (530) umfasst, wobei das Verfahren (400) Folgendes umfasst:
• Zugreifen (410) auf ein computerlesbares Medium, umfassend Anweisungen, die, bei Ausführung durch einen Prozessor (300), den Prozessor (300) veranlasst, Softwarekomponenten auszuführen, umfassend:
∘ Ein Versionskontrollsystemmodul (510), das zu Folgendem konfiguriert ist:
▪ Speichern und Verwalten einer Konfigurationsdatei für jede Datenverarbeitungsinfrastruktur (10) innerhalb eines Konfigurations-Repositorys;
▪ Bereitstellen einer Historie aller an den Konfigurationsdateien vorgenommenen Änderungen;
∘ Ein hierarchisches Konfigurationsmodul (520), das zu Folgendem konfiguriert ist:
▪ Schreiben, Speichern und Verwalten von Konfigurationsdaten auf eine hierarchische Weise;
∘ Das Infrastruktur-Orchestrierungsmodul (530) jeder der Datenverarbeitungsinfrastrukturen, das zu Folgendem konfiguriert ist:
▪ Bereitstellen und Verwalten von containerisierten Anwendungen unter Verwendung deklarativer Konfigurationsdateien, die einen vorbestimmten Zustand jeder Anwendung und ihrer Abhängigkeiten definieren;
∘ Ein Konfigurationsmodul (240), das zu Folgendem konfiguriert ist:
▪ Überwachen des Konfigurations-Repositorys auf Änderungen und Erkennen, wenn neue Konfigurationen gepusht werden;
▪ Abrufen der aktualisierten Konfigurationen aus dem Repository;
▪ Anwenden der Aktualisierungen auf die Ziel-Computerinfrastruktur unter Verwendung einer orchestrierten Bereitstellungsstrategie gemäß einem vorbestimmten Satz von Regeln;
∘ Ein Zusammenstellungsmodul (570), das zu Folgendem konfiguriert ist:
▪ Definieren von Abhängigkeiten zwischen verschiedenen Komponenten und Bibliotheken;
• Definieren (420) von Datenverarbeitungsinfrastruktur-Ressourcen unter Verwendung einer Vorlage (13) für automatisierte Bereitstellung und Konfiguration einer Komponente, wobei der Schritt des Definierens Folgendes umfasst:
∘ Erstellen der Vorlage (13) deklarativer Konfigurationsdateien, durch das hierarchische Konfigurationsmodul (520), wobei die Vorlage (13) Folgendes umfasst:
▪ Eine Baumstruktur;
▪ Eine Vielzahl von Feldern, wobei jedes Feld mehrere Typen aufweist und konfiguriert ist, um mehrere Teilfelder zu umfassen;
▪ Variablen, die konfiguriert sind, um hierarchisiert zu werden, wobei jede Variable einen Namen aufweist und ein Zweig der Baumstruktur ist und andere Variablen referenziert;
∘ Definieren, durch das Konfigurationsmodul (240), der Konfiguration der Datenverarbeitungsinfrastrukturen (10), umfassend Interaktionen zwischen der Komponente und anderen Komponenten unter Verwendung der Vorlage;
• Speichern und Verwalten (430) von Konfigurationsdaten in dem Repository unter Verwendung des Versionskontrollsystemmoduls (510) und des hierarchischen Konfigurationsmoduls (520), wobei der Schritt des Speicherns und Verwaltens von Konfigurationsdaten Folgendes umfasst:
∘ Schreiben von Konfigurationen durch zumindest teilweises Ausfüllen der Vorlage (13), gemäß einer vorbestimmten hierarchischen Reihenfolge;
∘ Innerhalb der Vorlage (13), Schreiben von verschiedenen Variablen unter Einhaltung einer Prioritätsreihenfolge;
• Bereitstellen und Konfigurieren (440) der Komponente unter Verwendung des Zusammenstellungsmoduls (570), wobei der Schritt des Bereitstellens und Konfigurierens der Komponente Folgendes umfasst:
∘ Zuweisen der hierarchisierten Variablen zu jeder der Computerinfrastrukturen, wobei die Variablen ein Tag umfassen;
∘ Deklarieren jeder Datenverarbeitungsinfrastruktur durch ihre Tags;
∘ Abrufen der Vorlage (13);
∘ Erzeugen einer deklarativen Konfigurationsdatei für jede Datenverarbeitungsinfrastruktur, unter Verwendung des hierarchischen Konfigurationsmoduls (520), durch Ausfüllen der abgerufenen Vorlage (13) für jede Datenverarbeitungsinfrastruktur:
▪ Auflösen aller Variablen der Vorlage (13) angesichts des Tags der Datenverarbeitungsinfrastruktur und angesichts der Namen der Variablen;
▪ Erstellen eines Artefakts, umfassend die deklarative Konfigurationsdatei der Datenverarbeitungsinfrastruktur;
▪ Platzieren des Artefakts in dem Repository, unter Verwendung des Versionskontrollsystemmoduls (510); und
• Für jede Datenverarbeitungsinfrastruktur, Abrufen (450), unter Verwendung ihres Konfigurationsmoduls (240), des Artefakts aus dem Repository, sodass:
∘ In vorbestimmten Intervallen das Konfigurationsmodul (240) die Artefakte liest und Änderungen an eine Datenverarbeitungsinfrastruktur (10) propagiert.

2. Verfahren nach Anspruch 1, wobei die Prioritätsreihenfolge von dem Stamm der Baumstruktur zu dem Blatt der Baumstruktur ist.

3. Verfahren nach Anspruch 1, wobei jede Datenverarbeitungsinfrastruktur (10) ihr eigenes Konfigurationsmodul (240) aufweist, und wobei jedes Konfigurationsmodul (240) für ein Verzeichnis in dem Repository konfiguriert ist, das in einem spezifischen Zweig des Repositorys gegeben ist.

4. Verfahren (400) nach Anspruch 1, wobei die Softwarekomponenten ferner ein Metrikspeichermodul (540) umfasst, das zu Folgendem konfiguriert ist:
• Sammeln von Metriken von überwachten Datenverarbeitungsinfrastruktur-Komponenten;
• Speichern von Metriken in einer Zeitreihendatenbank zur späteren Abfrage und Analyse, mit einer vorbestimmten Aufbewahrungsdauer;
• Bereitstellen einer Webschnittstelle zur Visualisierung und Untersuchung von Metrikdaten;
• Ermöglichen automatisierter Entdeckung von neuen Datenverarbeitungsinfrastruktur-Komponenten durch periodisches Scannen des Netzwerks nach neuen Diensten und Endpunkten;
• Unterstützen von Alarmierung basierend auf vordefinierten Regeln; und
• Ermöglichen von automatisierten Backups und Wiederherstellungen der Metrikdaten.

5. Verfahren (400) nach einem der Ansprüche 1 bis 4, wobei die Softwarekomponenten ferner ein Metrikaggregatormodul (550) umfasst, das zu Folgendem konfiguriert ist:
• Sammeln und Aggregieren von Metriken von mehreren Metrikspeichermodul (540)-Instanzen, die in jeder Datenverarbeitungsinfrastruktur laufen;
• Speichern von Metriken unter Verwendung einer Kombination aus lokalem Speicher und Remote-Objektspeicher; und
• Ermöglichen automatisierter Datenaufbewahrungsrichtlinien basierend auf vordefinierten Regeln.

6. Verfahren (400) nach Anspruch 5, wenn Anspruch 5 von Anspruch 4 abhängig ist, ferner umfassend einen Schritt des Überwachens von Leistung und Ressourcennutzung unter Verwendung des Metrikspeichermoduls (540) und des Metrikaggregatormoduls (550), wobei der Schritt Folgendes umfasst:
• Offenlegen von Metriken über Aktionen, Status und Dauer von Aktionen, durch das Konfigurationsmodul (240) jeder Datenverarbeitungsinfrastruktur (10);
• Speichern, das Metrikspeichermodul (540), dieser Metriken lokal für einen ersten Zeitraum;
• Konsolidieren der Metriken an einer primären Datenverarbeitungsinfrastruktur DC1, um eine Gesamtsicht auf den Status aller von der zentralen Datenverarbeitungsinfrastruktur DC1 verwalteten Datenverarbeitungsinfrastrukturen bereitzustellen; und
• Speichern, das Metrikaggregatormodul (550), dieser konsolidierten Metriken für einen zweiten Zeitraum, wobei der zweite Zeitraum höher als der erste Zeitraum ist.

7. Verfahren (400) nach einem der Ansprüche 1 bis 6, ferner umfassend einen Schritt des Implementierens von Sicherheitsmaßnahmen für Zugriffskontrolle unter Verwendung des Versionskontrollsystemmoduls (510).

8. Verfahren (400) nach einem der Ansprüche 1 bis 7, wobei eine Vielzahl von deklarativen Konfigurationsdateien konfiguriert ist, um eine Anwendung zu beschreiben, wobei jede deklarative Konfigurationsdatei dieser Vielzahl von deklarativen Konfigurationsdateien gemeinsame Werte umfasst.

9. Verfahren (400) nach einem der Ansprüche 6 bis 8, wenn Ansprüche 7 und 8 von Anspruch 6 abhängig sind, wobei die Flotte von Datenverarbeitungsinfrastrukturen (10) mehrere Ebenen von Datenverarbeitungsinfrastrukturen (10) umfasst, in denen die primäre Datenverarbeitungsinfrastruktur DC1 konfiguriert ist, um eine Gruppe von sekundären Datenverarbeitungsinfrastrukturen (10) zu verwalten, wobei jede sekundäre Datenverarbeitungsinfrastruktur konfiguriert ist, um eine oder mehrere tertiäre Datenverarbeitungsinfrastrukturen (10) zu verwalten.

10. Verfahren (400) nach Anspruch 9, wobei die primäre Datenverarbeitungsinfrastruktur DC1 konfiguriert ist, um die Konfiguration und Orchestrierung aller Datenverarbeitungsinfrastrukturen (10) in der Flotte von Datenverarbeitungsinfrastrukturen (10), einschließlich der sekundären und tertiären Datenverarbeitungsinfrastrukturen, zu verwalten, und um Daten an sie zu replizieren.

11. Verfahren (400) nach Anspruch 9, wobei die primäre Datenverarbeitungsinfrastruktur DC1 konfiguriert ist, um die Konfiguration und Orchestrierung aller sekundären Datenverarbeitungsinfrastrukturen (10) in der Flotte von Datenverarbeitungsinfrastrukturen (10) zu verwalten, und wobei jede sekundäre Datenverarbeitungsinfrastruktur (10) konfiguriert ist, um die Konfiguration und Orchestrierung aller ihrer zugeordneten tertiären Datenverarbeitungsinfrastrukturen (10) in der Flotte von Datenverarbeitungsinfrastrukturen (10) zu verwalten.

12. Verfahren (400) nach einem der Ansprüche 1 bis 11, ferner umfassend, nach dem Schritt des Abrufens (450), eine computerimplementierte Phase (100) für automatisierte Bereitstellung einer Datenverarbeitungsinfrastruktur (10), wobei die Datenverarbeitungsinfrastruktur (10) einen nicht bereitgestellten Server (11) und einen Switch (12) umfasst, wobei die automatisierte Bereitstellungsphase (100) Folgendes umfasst:
• Zugreifen (110) auf ein computerlesbares Medium, umfassend Anweisungen, die, bei Betreiben durch den Prozessor (300), die Ausführung von Softwarekomponenten veranlasst, umfassend:
∘ ein Konfigurationsverwaltungsdatenbank-(CMDB-)Modul (210), das konfiguriert ist, um Bestandsdaten in Bezug auf den nicht bereitgestellten Server (11) und auf den Switch (12) zu verwalten und zu speichern;
∘ ein Bereitstellungsmodul (220), das konfiguriert ist, um die Datenverarbeitungsinfrastruktur (10) bereitzustellen;
∘ ein Kommunikationsmodul (230), das zu Folgendem konfiguriert ist:
▪ Ermöglichen der Kommunikation zwischen dem Konfigurationsverwaltungsdatenbank-Modul (210) und dem Bereitstellungsmodul (220); und
▪ Verwalten mindestens eines Schnittstellenmoduls für ein dynamisches Hostkonfigurationsprotokoll, DHCP;
∘ das Konfigurationsmodul (240), das konfiguriert ist, um das Konfigurationsverwaltungsdatenbank-Modul (210) mit Informationen in Bezug auf den Switch (12) und seine Konfiguration zu initialisieren;
∘ ein Network Operations Gateway-, NOG-, Modul (250), das konfiguriert ist, um den Switch (12) zu verwalten und zu steuern, durch Empfangen von Konfigurationsdaten von dem CMDB-Modul (210) und durch Anwenden der empfangenen Konfigurationen auf den Switch (12);
∘ ein Domainnamensystem-, DNS-, Modul (260), das konfiguriert ist, um die Domainnamensystem-Dienste in der Datenverarbeitungsinfrastruktur (10) zu verwalten;
• Berechnen (120), unter Verwendung des hierarchischen Konfigurationsmoduls (520) und des Zusammenstellungsmoduls (570), eines Artefakts, umfassend Daten zum Initialisieren des Konfigurationsverwaltungsdatenbank-Moduls (210), wobei die berechneten Daten mindestens eine Internetprotokoll-(IP-)Adresse des Switches (12) umfassen;
• Initialisieren (130), durch das Konfigurationsmodul (240), zumindest eines Teils der Softwarekomponenten, durch:
∘ Initialisieren des Konfigurationsverwaltungsdatenbank-Moduls (210) unter Verwendung der berechneten Daten; und
∘ Konfigurieren des Domainnamensystem-Moduls (260) mit Konfigurationen aus dem CMDB-Modul (210);
• Bestimmen (140), unter Verwendung des Konfigurationsverwaltungsdatenbank-Moduls (210), von Konfigurationen für:
∘ das Kommunikationsmodul (230) auf mindestens einem Intelligent Platform Management Interface, IPMI, und auf mindestens einem Managementnetzwerk; und
∘ den Switch (12), der konfiguriert ist, um basierend auf den berechneten Daten aus dem Konfigurationsverwaltungsdatenbank-Modul (210) bereitgestellt zu werden;
• Bereitstellen (150) mindestens eines Netzwerk-Stacks mit Bereitstellungsdaten aus dem Konfigurationsverwaltungsdatenbank-Modul (210), wobei die Bereitstellungsdaten Daten in Bezug auf Netzwerkvorrichtungen, -schnittstellen, -netzwerke und die durch das CMDB-Modul (210) bestimmten Konfigurationen umfassen, wobei Bereitstellen (150) umfasst:
∘ Bereitstellen des DNS-Moduls (260);
∘ Bereitstellen des Netzwerkoperationen-Gateway-Moduls (250);
• Deklarieren (160) mindestens eines Netzwerks in dem Bereitstellungsmodul (220);
• Synchronisieren (170) des Bereitstellungsmoduls (220) mit dem Konfigurationsverwaltungsdatenbank-Modul (210), um einen Server-Entdeckungsprozess durch das Bereitstellungsmodul (220) unter Verwendung des Kommunikationsmoduls (230) zu starten; und
• Booten (180), über das IPMI, des nicht bereitgestellten Servers (11), um durch das Bereitstellungsmodul (220) entdeckt zu werden.

13. Computerlesbares Speichermedium, das Anweisungen speichert, die, bei Ausführung durch ein Verarbeitungssystem, das Verarbeitungssystem veranlassen, das Verfahren nach einem der Ansprüche 1 bis 12 durchzuführen.

14. Verarbeitungssystem (500) zur Verwaltung mindestens einer Flotte von Datenverarbeitungsinfrastrukturen (10), wobei jede Datenverarbeitungsinfrastruktur (10) ein Infrastruktur-Orchestrierungsmodul (530) umfasst, umfassend mindestens:
• einen Prozessor (300);
• ein computerlesbares Medium, umfassend Anweisungen, die, bei Betreiben durch den Prozessor (300), die Ausführung von Softwarekomponenten veranlasst, umfassend:
∘ Ein Versionskontrollsystemmodul (510), wobei das Versionskontrollsystemmodul zu Folgendem konfiguriert ist:
▪ Speichern und Verwalten mindestens einer Konfigurationsdatei für jede Datenverarbeitungsinfrastruktur (10) innerhalb eines Konfigurations-Repositorys;
▪ Bereitstellen einer Historie aller an den Konfigurationsdateien vorgenommenen Änderungen;
∘ Ein hierarchisches Konfigurationsmodul (520), wobei das hierarchische Konfigurationsmodul zu Folgendem konfiguriert ist:
▪ Schreiben, Speichern und Verwalten von Konfigurationsdaten auf eine hierarchische Weise;
▪ Erstellen von Vorlagen von deklarativen Konfigurationsdateien, wobei jede Vorlage Folgendes umfasst:
• Eine Baumstruktur;
• Eine Vielzahl von Feldern, wobei jedes Feld mehrere Typen aufweist und konfiguriert ist, um mehrere Teilfelder zu umfassen;
• Variablen, vorzugsweise in der Form von Blöcken, die konfiguriert sind, um faktorisiert zu werden, wobei jede Variable ein Zweig der Baumstruktur ist und andere Variablen referenziert;
▪ Schreiben von Konfigurationen durch zumindest teilweises Ausfüllen von betrachteten Vorlagen, gemäß einer vorbestimmten hierarchischen Reihenfolge;
▪ Innerhalb jeder betrachteten Vorlage, Schreiben von verschiedenen Variablen unter Einhaltung einer Prioritätsreihenfolge, von dem Stamm der Baumstruktur zu dem Blatt der Baumstruktur;
• Das Infrastruktur-Orchestrierungsmodul (530) jeder der Datenverarbeitungsinfrastrukturen, das zu Folgendem konfiguriert ist:
∘ Bereitstellen und Verwalten von containerisierten Anwendungen unter Verwendung deklarativer Konfigurationsdateien (Manifeste), die einen vorbestimmten Zustand jeder Anwendung und ihrer Abhängigkeiten definieren;
• Ein Konfigurationsmodul (240), wobei das Konfigurationsmodul zu Folgendem konfiguriert ist:
∘ Überwachen des Konfigurations-Repositorys auf Änderungen und Erkennen, wenn neue Konfigurationen gepusht werden;
∘ Abrufen der aktualisierten Konfigurationen aus dem Repository;
∘ Anwenden der Aktualisierungen auf die Ziel-Computerinfrastruktur unter Verwendung einer orchestrierten Bereitstellungsstrategie gemäß einem vorbestimmten Satz von Regeln; und
• Ein Zusammenstellungsmodul (570), wobei das Zusammenstellungsmodul zu Folgendem konfiguriert ist:
∘ Definieren von Abhängigkeiten zwischen verschiedenen Komponenten und Bibliotheken;
• Definieren (420) von Datenverarbeitungsinfrastruktur-Ressourcen unter Verwendung einer Vorlage (13) für automatisierte Bereitstellung und Konfiguration einer Komponente, wobei der Schritt des Definierens Folgendes umfasst:
∘ Erstellen der Vorlage (13) deklarativer Konfigurationsdateien, durch das hierarchische Konfigurationsmodul (520), wobei die Vorlage (13) Folgendes umfasst:
▪ Eine Baumstruktur;
▪ Eine Vielzahl von Feldern, wobei jedes Feld mehrere Typen aufweist und konfiguriert ist, um mehrere Teilfelder zu umfassen;
▪ Variablen, die konfiguriert sind, um hierarchisiert zu werden, wobei jede Variable einen Namen aufweist und ein Zweig der Baumstruktur ist und andere Variablen referenziert;
∘ Definieren, durch das Konfigurationsmodul (240), der Konfiguration der Datenverarbeitungsinfrastrukturen (10), umfassend Interaktionen zwischen der Komponente und anderen Komponenten unter Verwendung der Vorlage;
• Speichern und Verwalten (430) von Konfigurationsdaten in dem Repository unter Verwendung des Versionskontrollsystemmoduls (510) und des hierarchischen Konfigurationsmoduls (520), wobei der Schritt des Speicherns und Verwaltens von Konfigurationsdaten Folgendes umfasst:
∘ Schreiben von Konfigurationen durch zumindest teilweises Ausfüllen der Vorlage (13), gemäß einer vorbestimmten hierarchischen Reihenfolge;
∘ Innerhalb der Vorlage (13), Schreiben von verschiedenen Variablen unter Einhaltung einer Prioritätsreihenfolge;
• Bereitstellen und Konfigurieren (440) der Komponente unter Verwendung des Zusammenstellungsmoduls (570), wobei der Schritt des Bereitstellens und Konfigurierens der Komponente Folgendes umfasst:
∘ Zuweisen der hierarchisierten Variablen zu jeder der Computerinfrastrukturen, wobei die Variablen ein Tag umfassen;
∘ Deklarieren jeder Datenverarbeitungsinfrastruktur durch ihre Tags;
∘ Abrufen der Vorlage (13);
∘ Erzeugen einer deklarativen Konfigurationsdatei für jede Datenverarbeitungsinfrastruktur, unter Verwendung des hierarchischen Konfigurationsmoduls (520), durch Ausfüllen der abgerufenen Vorlage (13) für jede Datenverarbeitungsinfrastruktur:
▪ Auflösen aller Variablen der Vorlage (13) angesichts des Tags der Datenverarbeitungsinfrastruktur und angesichts der Namen der Variablen;
▪ Erstellen eines Artefakts, umfassend die deklarative Konfigurationsdatei der Datenverarbeitungsinfrastruktur;
▪ Platzieren des Artefakts in dem Repository, unter Verwendung des Versionskontrollsystemmoduls (510); und
• Für jede Datenverarbeitungsinfrastruktur, Abrufen (450), unter Verwendung ihres Konfigurationsmoduls (240), des Artefakts aus dem Repository, sodass:
∘ In vorbestimmten Intervallen das Konfigurationsmodul (240) die Artefakte liest und Änderungen an eine Datenverarbeitungsinfrastruktur (10) propagiert.

15. Verarbeitungssystem (240) nach Anspruch 14, ferner umfassend ein Verarbeitungsuntersystem (200) für automatisierte Bereitstellung mindestens einer Datenverarbeitungsinfrastruktur (10), umfassend mindestens:
• einen nicht bereitgestellten Server (11), und
• mindestens einen Switch (12);
wobei die Softwarekomponenten ferner Folgendes umfassen:
∘ ein Konfigurationsverwaltungsdatenbank-, CMDB-, Modul (210), das konfiguriert ist, um Bestandsdaten in Bezug auf den nicht bereitgestellten Server und auf den Switch zu verwalten und zu speichern;
∘ ein Bereitstellungsmodul (220), das konfiguriert ist, um die Datenverarbeitungsinfrastruktur bereitzustellen;
∘ ein Kommunikationsmodul (230), das zu Folgendem konfiguriert ist:
▪ Ermöglichen der Kommunikation zwischen dem Konfigurationsverwaltungsdatenbank-Modul (210) und dem Bereitstellungsmodul (220); und
▪ Verwalten mindestens eines Schnittstellenmoduls für ein dynamisches Hostkonfigurationsprotokoll, DHCP;
∘ das Konfigurationsmodul (240), das konfiguriert ist, um das Konfigurationsverwaltungsdatenbank-Modul (210) mit Informationen in Bezug auf den Switch und seine Konfiguration zu initialisieren;
∘ ein Network Operations Gateway-, NOG-, Modul (250), das konfiguriert ist, um den Switch zu verwalten und zu steuern, durch Empfangen von Konfigurationsdaten von dem Konfigurationsverwaltungsdatenbank-Modul (210) und durch Anwenden der empfangenen Konfigurationen auf den Switch; und
∘ ein Domainnamensystem-, DNS-, Modul (260), das konfiguriert ist, um die Domainnamensystem-Dienste in der Datenverarbeitungsinfrastruktur zu verwalten.

## Revendications

1. Procédé mis en œuvre par ordinateur (400) de gestion d'une flotte d'infrastructures informatiques (10), chaque infrastructure informatique comprenant un module d'orchestration d'infrastructure (530), le procédé (400) comprenant :
• l'accès (410) à un support lisible par ordinateur comprenant des instructions qui, lorsqu'elles sont exécutées par un processeur (300), amènent le processeur (300) à exécuter des composants logiciels comprenant :
∘ un module de système de commande de version (510) configuré pour :
▪ stocker et gérer un fichier de configuration pour chaque infrastructure informatique (10) dans un référentiel de configuration ;
▪ fournir un historique de toutes les modifications apportées aux fichiers de configuration ;
∘ un module de configuration hiérarchique (520) configuré pour :
▪ écrire, stocker et gérer des données de configuration de manière hiérarchique ;
∘ le module d'orchestration d'infrastructure (530) de chacune des infrastructures informatiques est configuré pour :
▪ déployer et gérer des applications conteneurisées à l'aide de fichiers de configuration déclaratifs qui définissent un état prédéterminé de chaque application et de ses dépendances ;
∘ un module de configuration (240) configuré pour :
▪ surveiller le référentiel de configuration pour détecter les modifications et repérer les nouvelles configurations qui y sont ajoutées ;
▪ extraire les configurations mises à jour à partir du référentiel ;
▪ appliquer les mises à jour à l'infrastructure informatique cible à l'aide d'une stratégie de déploiement orchestrée selon un ensemble de règles prédéterminées ;
∘ un module d'assemblage (570) configuré pour :
▪ définir les dépendances entre les différents composants et bibliothèques ;
• la définition (420) de ressources d'infrastructure informatique à l'aide d'un modèle (13) pour le déploiement et la configuration automatisés d'un composant, l'étape de définition comprenant :
∘ la création du modèle (13) de fichiers de configuration déclaratifs, par le module de configuration hiérarchique (520), le modèle (13) comprenant :
▪ une structure arborescente ;
▪ une pluralité de champs, chaque champ étant de type multiple et configuré pour comprendre de multiples sous-champs ;
▪ des variables configurées pour être hiérarchisées, chaque variable ayant un nom et étant une branche de la structure arborescente et faisant référence à d'autres variables ;
∘ la définition, par le module de configuration (240), de la configuration des infrastructures informatiques (10), comprenant les interactions entre le composant et d'autres composants à l'aide du modèle ;
• le stockage et la gestion (430) de données de configuration dans le référentiel à l'aide du module de système de commande de version (510) et du module de configuration hiérarchique (520), l'étape de stockage et de gestion de données de configuration comprenant :
∘ l'écriture de configurations en complétant au moins partiellement le modèle (13), selon un ordre hiérarchique prédéterminé ;
∘ dans le modèle (13), l'écriture de différentes variables tout en respectant un ordre de priorité ;
• le déploiement et la configuration (440) du composant à l'aide du module d'assemblage (570), l'étape de déploiement et de configuration du composant comprenant :
∘ l'attribution des variables hiérarchisées à chacune des infrastructures informatiques, les variables comprenant une étiquette ;
∘ la déclaration de chaque infrastructure informatique par ses étiquettes ;
∘ la récupération du modèle (13) ;
∘ la génération d'un fichier de configuration déclaratif pour chaque infrastructure informatique, à l'aide du module de configuration hiérarchique (520), par remplissage du modèle récupéré (13) pour chaque infrastructure informatique :
▪ la résolution de toutes les variables du modèle (13) étant donné l'étiquette de l'infrastructure informatique et étant donné les noms des variables ;
▪ la création d'un artefact comprenant le fichier de configuration déclaratif de l'infrastructure informatique ;
▪ le placement de l'artefact dans le référentiel, à l'aide du module de système de commande de version (510) ; et
• pour chaque infrastructure informatique, l'extraction (450), à l'aide de son module de configuration (240), de l'artefact à partir du référentiel de sorte que :
∘ à intervalles prédéterminés, le module de configuration (240) lit les artefacts et propage les modifications à une infrastructure informatique (10).

2. Procédé selon la revendication 1, dans lequel l'ordre de priorité va du tronc de la structure arborescente à la feuille de la structure arborescente.

3. Procédé selon la revendication 1, dans lequel chaque infrastructure informatique (10) a son propre module de configuration (240), et dans lequel chaque module de configuration (240) est configuré pour un répertoire dans le référentiel donné dans une branche spécifique du référentiel.

4. Procédé (400) selon la revendication 1, dans lequel les composants logiciels comprennent en outre un module de stockage de métriques (540) configuré pour :
• collecter des métriques à partir de composants d'infrastructure informatique surveillés ;
• stocker les métriques dans une base de données de séries temporelles pour des requêtes et des analyses ultérieures, avec une période de conservation prédéterminée ;
• fournir une interface Web pour visualiser et explorer les données de métriques ;
• activer la découverte automatisée de nouveaux composants d'infrastructure informatique en analysant périodiquement le réseau à la recherche de nouveaux services et points de terminaison ;
• prendre en charge des alertes sur la base de règles prédéfinies ; et
• activer les sauvegardes et restaurations automatisées des données de métriques.

5. Procédé (400) selon l'une quelconque des revendications 1 à 4, dans lequel les composants logiciels comprennent en outre un module d'agrégation de métriques (550) configuré pour :
• collecter et agréger les métriques provenant de multiples instances du module de stockage de métriques (540) exécutées dans chaque infrastructure informatique ;
• stocker les métriques à l'aide d'une combinaison de stockage local et de stockage d'objets distant ; et
• activer les politiques automatisées de conservation des données sur la base de règles prédéfinies.

6. Procédé (400) selon la revendication 5, lorsque la revendication 5 fait référence à la revendication 4, comprenant en outre une étape de surveillance des performances et de l'utilisation des ressources à l'aide du module de stockage de métriques (540) et du module d'agrégation de métriques (550), l'étape comprenant :
• l'exposition des métriques sur les actions, l'état et la durée des actions, par le module de configuration (240) de chaque infrastructure informatique (10) ;
• le stockage, par le module de stockage de métriques (540), de ces métriques localement pendant une première période ;
• la consolidation des métriques au niveau d'une infrastructure informatique primaire DC1 afin de fournir une vue d'ensemble de l'état de toutes les infrastructures informatiques gérées par l'infrastructure informatique centrale DC1 ; et
• le stockage, par le module d'agrégation de métriques (550), de ces métriques consolidées pendant une seconde période, la seconde période étant supérieure à la première période.

7. Procédé (400) selon l'une quelconque des revendications 1 à 6, comprenant en outre une étape de mise en œuvre de mesures de sécurité pour la commande d'accès à l'aide du module de système de commande de version (510).

8. Procédé (400) selon l'une quelconque des revendications 1 à 7, dans lequel une pluralité de fichiers de configuration déclaratifs est configurée pour décrire une application, chaque fichier de configuration déclaratif de cette pluralité de fichiers de configuration déclaratifs comprenant des valeurs communes.

9. Procédé (400) selon l'une quelconque des revendications 6 à 8, lorsque les revendications 7 et 8 font référence à la revendication 6, dans lequel la flotte d'infrastructures informatiques (10) comprend de multiples niveaux d'infrastructures informatiques (10), dans lesquels l'infrastructure informatique primaire DC1 est configurée pour gérer un groupe d'infrastructures informatiques secondaires (10), chaque infrastructure informatique secondaire étant configurée pour gérer une ou plusieurs infrastructures informatiques tertiaires (10).

10. Procédé (400) selon la revendication 9, dans lequel l'infrastructure informatique primaire DC1 est configurée pour gérer la configuration et l'orchestration de toutes les infrastructures informatiques (10) dans la flotte d'infrastructures informatiques (10), comportant les infrastructures informatiques secondaires et tertiaires, et pour y répliquer des données.

11. Procédé (400) selon la revendication 9, dans lequel l'infrastructure informatique primaire DC1 est configurée pour gérer la configuration et l'orchestration de toutes les infrastructures informatiques secondaires (10) dans la flotte d'infrastructures informatiques (10), et dans lequel chaque infrastructure informatique secondaire (10) est configurée pour gérer la configuration et l'orchestration de toutes ses infrastructures informatiques tertiaires associées (10) dans la flotte d'infrastructures informatiques (10).

12. Procédé (400) selon l'une quelconque des revendications 1 à 11, comprenant en outre, après l'étape d'extraction (450), une phase (100) mise en œuvre par ordinateur de déploiement automatisé d'une infrastructure informatique (10), l'infrastructure informatique (10) comprenant un serveur non provisionné (11) et un commutateur (12), la phase de déploiement automatisé (100) comprenant :
• l'accès (110) à un support lisible par ordinateur comprenant des instructions qui, lorsqu'elles sont exploitées par le processeur (300), entraînent l'exécution de composants logiciels comprenant :
∘ un module de base de données de gestion de configuration, CMDB, (210) configuré pour gérer et stocker des données d'inventaire relatives au serveur non provisionné (11) et au commutateur (12) ;
∘ un module de déploiement (220) configuré pour déployer l'infrastructure informatique (10) ;
∘ un module de communication (230) configuré pour :
▪ permettre la communication entre le module de base de données de gestion de configuration (210) et le module de déploiement (220) ; et
▪ gérer au moins un module d'interface de protocole de configuration dynamique des hôtes, DHCP ;
∘ le module de configuration (240) étant configuré pour initialiser le module de base de données de gestion de configuration (210) avec des informations relatives au commutateur (12) et à sa configuration ;
∘ un module de passerelle des opérations réseau, NOG, (250) configuré pour gérer et commander le commutateur (12) en recevant des données de configuration provenant du module CMDB (210) et en appliquant les configurations reçues au commutateur (12) ;
∘ un module de système de noms de domaine, DNS, (260) configuré pour gérer les services de système de noms de domaine dans l'infrastructure informatique (10) ;
• le calcul (120), à l'aide du module de configuration hiérarchique (520) et du module d'assemblage (570), d'un artefact comprenant des données pour initialiser le module de base de données de gestion de configuration (210), les données calculées comprenant au moins une adresse de protocole Internet (IP) du commutateur (12) ;
• l'initialisation (130), par le module de configuration (240), d'au moins une partie des composants logiciels, par :
∘ l'initialisation du module de base de données de gestion de configuration (210) à l'aide des données calculées ; et
∘ la configuration du module de système de noms de domaine (260) avec des configurations provenant du module CMDB (210) ;
• la détermination (140), à l'aide du module de base de données de gestion de configuration (210), de configurations pour :
∘ le module de communication (230) sur au moins une interface de gestion de plateforme intelligente, IPMI, et sur au moins un réseau de gestion ; et
∘ le commutateur (12) étant configuré pour être provisionné sur la base des données calculées provenant du module de base de données de gestion de configuration (210) ;
• le provisionnement (150) d'au moins une pile réseau avec des données de provisionnement provenant du module de base de données de gestion de configuration (210), les données de provisionnement comprenant des données relatives à des dispositifs réseau, des interfaces, des réseaux et les configurations déterminées par le module CMDB (210), le provisionnement (150) comprenant :
∘ le provisionnement du module DNS (260) ;
∘ le provisionnement du module passerelle des opérations réseau (250) ;
• la déclaration (160) d'au moins un réseau dans le module de déploiement (220) ;
• la synchronisation (170) du module de déploiement (220) avec le module de base de données de gestion de configuration (210) afin de lancer un processus de découverte de serveur par le module de déploiement (220) à l'aide du module de communication (230) ; et
• le démarrage (180), via l'IPMI, du serveur non provisionné (11) à découvrir par le module de déploiement (220).

13. Support de stockage lisible par ordinateur stockant des instructions qui, lorsqu'elles sont exécutées par un système de traitement, amènent le système de traitement à réaliser le procédé selon l'une quelconque des revendications 1 à 12.

14. Système de traitement (500) pour gérer au moins une flotte d'infrastructures informatiques (10), chaque infrastructure informatique (10) comprenant un module d'orchestration d'infrastructure (530), comprenant au moins :
• un processeur (300) ;
• un support lisible par ordinateur comprenant des instructions qui, lorsqu'elles sont exécutées par le processeur (300), entraînent l'exécution de composants logiciels comprenant :
∘ un module de système de commande de version (510), le module de système de commande de version étant configuré pour :
▪ stocker et gérer au moins un fichier de configuration pour chaque infrastructure informatique (10) dans un référentiel de configuration ;
▪ fournir un historique de toutes les modifications apportées aux fichiers de configuration ;
∘ un module de configuration hiérarchique (520), le module de configuration hiérarchique étant configuré pour :
▪ écrire, stocker et gérer des données de configuration de manière hiérarchique ;
▪ créer des modèles de fichiers de configuration déclaratifs, chaque modèle comprenant :
• une structure arborescente ;
• une pluralité de champs, chaque champ étant de type multiple et configuré pour comprendre de multiples sous-champs ;
• des variables, de préférence sous forme de blocs configurés pour être factorisés, chaque variable constituant une branche de la structure arborescente et faisant référence à d'autres variables ;
▪ écrire des configurations en complétant au moins partiellement les modèles considérés, selon un ordre hiérarchique prédéterminé ;
▪ dans chaque modèle considéré, écrire différentes variables tout en respectant un ordre de priorité, du tronc de la structure arborescente à la feuille de la structure arborescente ;
• le module d'orchestration d'infrastructure (530) de chacune des infrastructures informatiques est configuré pour :
∘ déployer et gérer des applications conteneurisées à l'aide de fichiers de configuration déclaratifs (manifestes) qui définissent un état prédéterminé de chaque application et de ses dépendances ;
• un module de configuration (240), le module de configuration étant configuré pour :
∘ surveiller le référentiel de configuration pour détecter les modifications et repérer les nouvelles configurations qui y sont ajoutées ;
∘ extraire les configurations mises à jour à partir du référentiel ;
∘ appliquer les mises à jour à l'infrastructure informatique cible à l'aide d'une stratégie de déploiement orchestrée selon un ensemble de règles prédéterminées ; et
• un module d'assemblage (570), le module d'assemblage étant configuré pour :
∘ définir les dépendances entre les différents composants et bibliothèques ;
• la définition (420) de ressources d'infrastructure informatique à l'aide d'un modèle (13) pour le déploiement et la configuration automatisés d'un composant, l'étape de définition comprenant :
∘ la création du modèle (13) de fichiers de configuration déclaratifs, par le module de configuration hiérarchique (520), le modèle (13) comprenant :
▪ une structure arborescente ;
▪ une pluralité de champs, chaque champ étant de type multiple et configuré pour comprendre de multiples sous-champs ;
▪ des variables configurées pour être hiérarchisées, chaque variable ayant un nom et étant une branche de la structure arborescente et faisant référence à d'autres variables ;
∘ la définition, par le module de configuration (240), de la configuration des infrastructures informatiques (10), comprenant les interactions entre le composant et d'autres composants à l'aide du modèle ;
• le stockage et la gestion (430) de données de configuration dans le référentiel à l'aide du module de système de commande de version (510) et du module de configuration hiérarchique (520), l'étape de stockage et de gestion de données de configuration comprenant :
∘ l'écriture de configurations en complétant au moins partiellement le modèle (13), selon un ordre hiérarchique prédéterminé ;
∘ dans le modèle (13), l'écriture de différentes variables tout en respectant un ordre de priorité ;
• le déploiement et la configuration (440) du composant à l'aide du module d'assemblage (570), l'étape de déploiement et de configuration du composant comprenant :
∘ l'attribution des variables hiérarchisées à chacune des infrastructures informatiques, les variables comprenant une étiquette ;
∘ la déclaration de chaque infrastructure informatique par ses étiquettes ;
∘ la récupération du modèle (13) ;
∘ la génération d'un fichier de configuration déclaratif pour chaque infrastructure informatique, à l'aide du module de configuration hiérarchique (520), par remplissage du modèle récupéré (13) pour chaque infrastructure informatique :
▪ la résolution de toutes les variables du modèle (13) étant donné l'étiquette de l'infrastructure informatique et étant donné les noms des variables ;
▪ la création d'un artefact comprenant le fichier de configuration déclaratif de l'infrastructure informatique ;
▪ le placement de l'artefact dans le référentiel, à l'aide du module de système de commande de version (510) ; et
• pour chaque infrastructure informatique, l'extraction (450), à l'aide de son module de configuration (240), de l'artefact à partir du référentiel de sorte que :
∘ à intervalles prédéterminés, le module de configuration (240) lit les artefacts et propage les modifications à une infrastructure informatique (10).

15. Système de traitement (240) selon la revendication 14, comprenant en outre un sous-système de traitement (200) pour le déploiement automatisé d'au moins une infrastructure informatique (10) comprenant au moins :
• un serveur non provisionné (11), et
• au moins un commutateur (12) ;
dans lequel les composants logiciels comprennent en outre :
∘ un module de base de données de gestion de configuration, DMDB, (210) configuré pour gérer et stocker des données d'inventaire relatives au serveur non provisionné et au commutateur ;
∘ un module de déploiement (220) configuré pour déployer l'infrastructure informatique ;
∘ un module de communication (230) configuré pour :
▪ permettre la communication entre le module de base de données de gestion de configuration (210) et le module de déploiement (220) ; et
▪ gérer au moins un module d'interface de protocole de configuration dynamique des hôtes, DHCP ;
∘ le module de configuration (240) étant configuré pour initialiser le module de base de données de gestion de configuration (210) avec des informations relatives au commutateur et à sa configuration ;
∘ un module de passerelle des opérations réseau, NOG, (250) configuré pour gérer et commander le commutateur en recevant des données de configuration provenant du module de base de données de gestion de configuration (210) et en appliquant les configurations reçues au commutateur ; et
∘ un module de système de noms de domaine, DNS, (260) configuré pour gérer les services de système de noms de domaine dans l'infrastructure informatique.
